# EUROPEAN PATENT SPECIFICATION

(11) **EP 0 305 047 B1**
(45) Date of publication and mention of the grant of the patent: **17.02.1993**
(21) Application number: 88306727.4
(22) Date of filing: 21.07.1988
(51) Int. Cl.: C10J 3/46, C01B 3/36

(54) **High temperature desulfurization of synthesis gas**
Hochtemperaturentschweflung von Synthesegas
Désulfuration de gaz de synthèse à haute température

(30) Priority: 28.09.1987 US 101519; 13.10.1987 US 107065; 28.08.1987 US 90822
(43) Date of publication of application: 01.03.1989
(73) Proprietor: TEXACO DEVELOPMENT CORPORATION, White Plains, New York 10650 (US)
(72) Inventor: Najjar, Mitri Salim, Hopewell Junction, NY 12533 (US); Suggitt, Robert Murray, Wappinger Falls, NY 12590 (US); Corbeels, Roger Jean, Wappinger Falls, NY 12590 (US)
(74) Representative: Ben-Nathan, Laurence Albert

(56) References cited:
- EP-A- 0 148 542
- FR-A- 2 578 263
- GB-A- 2 003 496
- US-A- 2 671 723
- US-A- 2 691 573
- US-A- 4 602 573
- US-A- 4 655 792
- US-A- 4 668 428

## Description

### BACKGROUND OF THE INVENTION

This invention relates to the gasification of sulfur-containing liquid hydrocarbonaceous fuel or a slurry of sulfur-containing solid carbonaceous fuel. More specifically it relates to the removal of sulfur-containing gases from the raw effluent synthesis gas stream produced in a refractory lined free-flow gas generator.

As supplies of petroleum gradually diminish sulfur-containing heavy liquid hydrocarbonaceous fuel and/or sulfur-containing coal which is America's most abundant form of fossil fuel will play an increasingly major role in providing for the nation's energy requirements. One ton of coal contains the same amount of energy as three to four barrels of crude oil. Accordingly, in the future it will become necessary to produce an increasing fraction of liquid and gaseous fuels from these sulfur-containing comparatively low cost fuels. The synthesis, reducing, and fuel gases produced from these sulfur-containing materials contain a comparatively high e.g. from about 0.1 to 2.0 mole % of H₂S and COS. The desirability for removing, at high temperatures, a major share of the sulfur present in synthesis gas, as generated in a Partial Oxidation Gasification Process, is widely recognized. In particular, removal of sulfur from syngas at high temperatures would improve combined cycle thermal efficiency by eliminating the need for costly cooling of product gases for low temperature acid gas wet scrubbing such as with Selexol or Rectisol. When the synthesis gas is burned as fuel in a gas turbine, it may be unnecessary to remove the last trace of sulfur. Energy savings such as possible through a high temperature (circa 538°C (1000°F)) desulfurization process can outweigh the need to get an extremely low sulfur content fuel gas. The gas produced by this invention may be used with or without further processing and/or purification as a gaseous fuel or as feedstock for the catalytic synthesis of liquid fuels.

Synthesis gas, fuel gas, and reducing gas may be produced from coal by well known gasification processes. For example, coassigned U.S. Pat. Nos. 3,544,291 and 4,289,502 respectively relate to a process for the partial oxidation of slurries of coal, and to an apparatus for producing cleaned and cooled synthesis gas by the partial oxidation of solid carbonaceous fuel.

The problem of ash deposition in synthesis gas coolers of slagging gasifiers was reported in Electric Power Research Institute AP-3806.

FR-A-2,578,263 discloses a method of gasifying fossil fuels and reforming gaseous fuel for the production of synthesis gas. The carbon-carrying fuel and an oxidant are injected into a reaction chamber with energy supplied by means of a gas heated in a plasma generator. A sulfur acceptor may be injected into the reaction zone.

The object of the subject invention is to provide an improvement in the art to permit long time operation of the partial oxidation gas generator without shut-down due to accumulation of slag on metal surfaces in the cooling zone. A further object is to remove sulfur containing gases and slag from the raw effluent synthesis gas stream produced in a refractory lined free flow gas generator.

The present invention is superior to the single-stage mode wherein an iron and calcium containing additive is mixed with the fuel feedstock to the gasifier, such as described in coassigned U.S. Patent No. 4,668,428, since lower dosages of iron or calcium can accept more sulfur at the lower temperature in the radiant cooler or second reaction zone of the subject invention. Further, the thermal energy produced by the sulfur removal reaction may be now recovered in the radiant cooler. Moreover, two-stage down-flowing and up-flowing gasification processes are known in the art, including for example U.S. Patent Nos. 2,801,158; 2,961,310; 3,988,123; 4,436,531; and 4,647,294. However, these processes do not provide for in-situ desulphurization of the product gas, nor for the production of slag having a lower melting point.

### SUMMARY OF THE INVENTION

The invention provides, in one aspect, a continuous process for producing a stream of synthesis gas, fuel gas or reducing gas by the non-catalytic partial oxidation of sulfur-containing heavy liquid hydrocarbonaceous fuel and/or sulfur-containing solid carbonaceous fuel with a free-oxygen containing gas. A liquid or gaseous carrier is used to introduce the solid fuel into the down-flowing reaction zone of the gas generator. An effluent gas stream is first produced by the partial oxidation of the sulfur-containing heavy liquid hydrocarbonaceous fuel and/or sulfur-containing solid carbonaceous fuel in the free-flow non-catalytic refractory lined gas generator at a temperature in the range of about 1038°C to 1593°C (1900°F. to 2900°F) and above the ash-fusion temperature of the slag formed in the reaction zone, and a pressure in the range of about 0.2 to 25 MPa (2 to 250 atmospheres). A temperature moderator such as H₂O may be employed when the liquid carrier is a liquid hydrocarbon fuel.

The partial oxidation gas generator is operated so as to convert from about 75 to 95 wt.% or 85 to 99 wt.% of the carbon in the fuel feed to the reaction zone into carbon oxides. The hot effluent gas stream leaving the gas generator comprises H₂, CO, CO₂, H₂S, COS and at least one gaseous material from the group consisting of H₂O, N₂, CH₄, NH₃, and A . Further, entrained in the hot effluent gas stream leaving the reaction zone is particulate carbon e.g. any remaining unconverted fuel and/or soot and the non-combustible inorganic ash portion of the fuel e.g. molten slag from the reacted portion of the solid carbonaceous fuel.

At least a portion e.g. about 20 to 100 volume % of the hot effluent gas stream leaving the reaction zone of the gas generator, with or without removal of a portion of the entrained particulate matter and/or slag, is passed through an unobstructed vertical central passage of a free-flow radiant cooler in admixture with an iron-containing additive. The remainder of the hot effluent gas stream, if any, may be cooled in a quench tank such as shown and described in coassigned U. S. Patent No. 4,328,006, which is incorporated herein by reference. The iron-containing additive may be introduced into the hot effluent gas stream at the entrance to and/or at one or more locations within the radiant cooler. Sufficient iron-containing additive is introduced into the hot effluent gas stream so as to provide in the radiant cooler a weight ratio of iron-containing additive to sulfur plus ash in the fuel feed in the range of about 0.5-10.0 to 1.0.
A tube-wall comprising pipes or coils through which cooling water is passed line the inside walls of the radiant cooler for use in controlling the reduction of the temperature of the stream of hot effluent gas passing therethrough. The hot effluent gas stream enters the radiant cooler at a temperature in the range of about 1038°C to 1538°C (1900°F to 2800°F) and leaves at a temperature in the range of about 538°C to 871°C (1000°F to 1600°F.), such as 816°C (1500°F). Cooling is effected by noncontact indirect heat exchange.

As the effluent gas stream passes through the unobstructed central passage of the radiant cooler, at least a portion i.e. about 50-100 weight percent and preferably all of the sulfur-containing gases in the effluent gas stream e.g. H₂S and COS react with the iron-containing additive to produce particulate matter comprising iron oxysulfide. Substantially no new elemental iron is formed from iron-containing additive compounds. Further, a portion e.g. about 5 to 20 wt. % of this newly formed particulate matter and iron-containing additive combine with slag and/or ash in the hot raw gas stream passing through the radiant gas cooler to produce slag with a reduced ash fusion temperature and viscosity, in comparison with the ash fusion temperature and viscosity of the ash and slag produced without the addition of the iron-containing additive. Gravity separation of the slag from the effluent gas stream is thereby facilitated. The remainder of the iron oxysulfide leaves the radiant cooler entrained in the effluent gas stream. The particulate matter is separated from the effluent gas stream by conventional gas-solids separation means and recycled to the reaction zone of the partial oxidation gas generator in admixture with the fuel feed. Alternatively, this newly formed particulate matter may be roasted to produce iron oxide and sulfur-containing gas e.g. SO₂. The iron oxide may be recycled to the radiant cooler as a portion of the iron-containing additive, and/or introduced into the partial oxidation reaction zone in admixture with the fuel feed to facilitate removal of the ash. The SO₂ may be recovered as a useful by-product. Advantageously, portions of the sensible heat in the stream of hot effluent gas from the partial oxidation reaction zone and from the exothermic reactions going on in the radiant cooler are recovered by indirect heat exchange with the cooling water flowing through the tube-wall in the radiant cooling zone. By-product steam may be thereby produced. Further, the desulfurized product gas is available for use at a higher temperature. Costly reheating is thereby avoided.

The invention also provides, in another aspect, an improved two-stage continuous process for the in-situ desulfurization of a stream of synthesis gas, fuel gas or reducing gas. In the first stage, non-catalytic partial oxidation of a first portion of sulfur-containing heavy liquid hydrocarbonaceous fuel and/or sulfur-containing solid carbonaceous fuel with a free-oxygen containing gas takes place in a first reaction zone R₁. In the second stage, the following take place in a second reaction zone R₂ : (i) devolatilizing a second portion of said sulfur-containing fuel; (ii) reaction of carbon from said second portion of sulfur-containing fuel and carbon from the unreacted portion of said first portion of sulfur-containing fuel with H₂O and/or CO₂ in the presence of an iron-containing or a calcium-containing additive to produce with an increased reaction rate additional H₂ and carbon oxides, (iii) conversion of sulfur in said second portion of sulfur-containing gases into iron oxysulfide or calcium sulfide. The temperature in R₂ is lower than that in R₁.

Preferably, the temperature in R₁ is above the softening temperature of the ash in R₁ . Simultaneously in the second stage, the iron oxysulfide reacts with slag to produce slag with a reduced melting point. This slag may be easily separated from the product gas for example by gravity. Further, carbon conversion is increased by the catalytic reactions between carbon and H₂O and/or CO₂ in the presence of an iron-containing additive that take place in the second reaction zone.

Alternatively, while the temperature in R₁ is above the softening temperature of the ash in R₁ thereby producing molten slag, the temperature in R₂ is below the softening temperature of the ash and slag in R₂ thereby producing fly-ash. The fly-ash may be separated from the product gas by scrubbing with a liquid hydrocarbonaceous material. Further, carbon conversion is increased by the catalytic reactions between carbon and H₂O and/or CO₂ in the presence of the calcium-containing additive that take place in the second reaction zone.

The sulfur-containing fuel feedstock is divided into two portions. About 50 to 100 wt. %, such as about 70 to 95 wt. % of the total amount of fuel feedstock is gasified in the first reaction zone; and, the remainder of the fuel feed is gasified in the second reaction zone along with the unreacted portion of the fuel feedstock from the first reaction zone.

A liquid or gaseous carrier is used to introduce the fuel into the first down-flowing or upflowing unobstructed refractory lined vertical cylindrical shaped reaction zone gas generator. An effluent gas stream is produced by the partial oxidation of the sulfur-containing heavy liquid hydrocarbonaceous fuel and/or sulfur-containing solid carbonaceous fuel in the first reaction zone located in a free-flow gas generator at a temperature in the range of about 1038°C to 1593°C (1900°F. to 2900°F) and above the ash-fusion temperature of the slag formed in the first reaction zone, and a pressure in the range of about 0.2 to 25 MPa (2 to 250 atmospheres). A temperature moderator such as H₂O may be employed when the carrier for the fuel is a liquid hydrocarbon fuel.

The partial oxidation gas generator is operated so as to convert into carbon oxides from about 85 to 99 wt. % or 75 to 95 wt.% of the carbon in the fuel feed entering the first reaction zone. The hot effluent gas stream leaving the gas generator comprises H₂, CO, CO₂, H₂S, COS and at least one gaseous material from the group consisting of H₂O, N₂, CH₄, NH₃, and A. Further, entrained in the hot effluent gas stream leaving the first reaction zone is particulate carbon e.g. any remaining unconverted fuel and/or soot and the non-combustible inorganic ash portion of the fuel e.g. slag from the reacted portion of the liquid hydrocarbonaceous or solid carbonaceous fuel.

At least a portion e.g. about 20 to 100 volume % of the hot effluent gas stream leaving the first reaction zone of the gas generator, with or without removal of a portion of the entrained particulate matter and/or slag, is passed through an unobstructed vertical central passage of a second reaction zone comprising a down-flowing, or up-flowing unobstructed refractory lined vertical cylindrical shaped chamber in admixture with a second portion of fuel comprising sulfur-containing heavy liquid hydrocarbonaceous fuel and/or sulfur-containing solid carbonaceous fuel, and an iron-containing or a calcium-containing additive. No supplemental free-oxygen containing gas from an external source is introduced into the second reaction zone. The remainder of the hot effluent gas stream, if any, from the first reaction zone may be cooled in a quench tank. Suitable gasification equipment which provide the first and second reaction zones R₁ and R₂ that are suitable for use in the subject process are shown and described in coassigned U.S. Patent Nos. 4,248,604; 4,328,006; 4,647,294; and also in U.S. Patent No. 2,961,310. These patents are incorporated herein by reference. The iron-containing or calcium-containing additive may be introduced into the hot effluent gas stream at the entrance to and/or at one or more locations within the second reaction zone R₂.

Sufficient iron-containing additive is introduced into the hot effluent gas stream so as to provide in the second reaction zone R₂ iron atoms in the amount of about 1.1 to 1.8 times the atoms of sulfur in the second reaction zone R₂ plus about 0.3 to 1.2 times the atoms of silicon in the ash in the second reaction zone R₂.

Alternatively, sufficient calcium-containing additive is introduced into the hot effluent gas stream so as to provide in the second reaction zone R₂ calcium atoms in the amount of about 0.95 to 1.8 times the atoms of sulfur in the second reaction zone R₂ plus about 0.1 to to 0.2 times the atoms of silicon in the ash in the second reaction zone R₂.

Moreover, the mole ratio of H₂O and/or CO₂ in the second reaction zone to the total amount of carbon in the second reaction zone plus the carbon in the unreacted fuel and particulate matter entrained in the hot raw effluent gas stream entering the second reaction zone R₂ is in the range of about 0.7 to 25.0, such as about 1.0 to 20.

The hot effluent gas stream enters the second reaction zone R₂ at a temperature in the range of about 1038°C to 1566°C (1900°F to 2850°F) and leaves at a temperature in the range of about 538°C to 1204°C (1000°F to 2200°F), such as 816°C (1500°F). Cooling is effected by devolatilizing the fuel, evaporating any liquid carrier, and by the endothermic reaction of carbon with H₂ O and/or CO₂ . The average temperature in R₂ is less than that in R₁.

As the effluent gas stream passes through the unobstructed central passage of the second reaction zone, at least a portion i.e. about 50-100 weight percent and preferably all of the sulfur-containing gases in the effluent gas stream e.g. H₂S and COS react with the iron-containing or calcium-containing additive to produce particulate matter comprising iron oxysulfide or calcium sulfide. Substantially no new elemental iron is formed from iron-containing or calcium-containing additive compounds.

A portion e.g. about 5 to 20 wt. % of this newly formed particulate matter and iron-containing additive combine with slag and/or ash in the hot raw gas stream passing through the second reaction zone R₂ to produce slag with a reduced ash softening temperature and viscosity in comparison with the ash softening temperature and viscosity of the ash and slag produced without the addition of the iron-containing additive. Gravity separation of the slag from the effluent gas stream is thereby facilitated. The remainder of the iron oxysulfide leaves the second reaction zone entrained in the effluent gas stream. The particulate matter is separated from the effluent gas stream by conventional gas-solids separation means and recycled to the reaction zone of the partial oxidation gas generator in admixture with the fuel feed. Alternatively, this newly formed particulate matter may be roasted to produce iron oxide and sulfur-containing gas e.g. SO₂. The iron oxide may be recycled to the second reaction zone as a portion of the iron-containing additive, and/or introduced into the partial oxidation first reaction zone in admixture with the fuel feed to facilitate removal of the ash. The SO₂ may be recovered as a useful by-product. Advantageously, portions of the sensible heat in the stream of hot effluent gas from the partial oxidation reaction zone are recovered by direct heat exchange with the fuel materials and carriers flowing through the second reaction zone. Further, the desulfurized product gas is available for use at a higher temperature. Costly reheating is thereby avoided.

Alternatively, a portion, e.g. about 5 to 20 wt. % of this newly formed particulate matter and calcium-containing additive combine with slag and/or ash in the hot raw gas stream passing through the second reaction zone R₂ to produce fly-ash with an increased ash softening temperature in comparison with the ash softening temperature of the ash produced without the addition of the calcium-containing additive. The calcium sulfide leaves the second reaction zone along with the fly-ash portion of the particulate matter entrained in the effluent gas stream. The particulate matter is separated from the effluent gas stream by scrubbing with a liquid hydrocarbonaceous material or by conventional gas-solids separation means. This newly formed particulate matter may be roasted to produce calcium oxide and sulfur-containing gas e.g. SO₂ . The calcium oxide may be recycled to the second reaction zone as a portion of the calcium-containing additive, and/or introduced into the partial oxidation first reaction zone in admixture with the fuel feed to facilitate removal of the ash. The SO₂ may be recovered as a useful by-product. Advantageously, portions of the sensible heat in the stream of hot effluent gas from the partial oxidation reaction zone are recovered by direct heat exchange with the fuel materials, free-oxygen containing gas and carriers flowing through the second reaction zone. Further, the desulfurized product gas is available for use at a higher temperature. Costly reheating is thereby avoided.

### DESCRIPTION OF THE INVENTION

The present invention pertains to a continuous process for the production of a desulfurized stream of synthesis gas, fuel gas, or reducing gas from sulfur-containing heavy liquid hydrocarbonaceous fuel and/or sulfur-containing solid carbonaceous fuel in a liquid or gaseous carrier. The hot effluent gas stream is desulfurized in-situ without reducing the temperature.

A typical down-flowing partial oxidation synthesis gas generator is shown in coassigned U.S. Patent No. 2,818,326. The gas generator is a vertical cylindrical steel pressure vessel lined on the inside with a thermal refractory material. A burner is located in the top of the gas generator along the central vertical axis for introducing the feed streams. A suitable annulus-type burner is shown in coassigned U.S. Patent No. 2,928,460.

The term sulfur-containing solid carbonaceous fuel includes coal, such as anthracite, bituminous, subbituminous; coke from coal; lignite; residue derived from coal liquefaction; oil shale; tar sands; petroleum coke; asphalt; pitch; particulate carbon (soot); concentrated sewer sludge; and mixtures thereof. The sulfur content of the solid carbonaceous fuel is in the range of about 0.2 to 6.0 wt. %. The ash or inorganic portion of the solid carbonaceous fuel is in the range of about 0.1 to 30 wt. %. Ash from solid carbonaceous fuel substantially comprises the oxides of Si, Fe, V, Ni and Al. The solid carbonaceous fuel may be ground to a particle size so that 100% passes through an ASTM E11-70 Sieve Designation Standard (SDS) 1.40 mm Alternative No. 14. Pumpable slurries of solid carbonaceous fuels may have a solids content in the range of about 25-70 wt. % such as 45-68 wt. %, depending on the characteristics of the fuel and the slurrying medium. The slurrying medium may be water, liquid hydrocarbon, or both.

The term sulfur-containing heavy liquid hydrocarbon fuel, as used herein, is intended to include various materials, such as virgin crude, residue from petroleum distillation and cracking, petroleum distillates, reduced crude, whole crude, asphalt, coal tar, coal derived oil, shale oil, tar sand oil and mixtures thereof. The sulfur and ash contents of the heavy liquid hydrocarbonaceous fuel are respectively in the ranges of about 0.5 to 5.0 weight %; and 100 to 10,000 parts per million. Ash from heavy liquid hydrocarbonaceous fuel substantially comprises the oxides and some sulfides of Fe, Ni, V and Si.

The use of a temperature moderator to moderate the temperature in the reaction zone of the gas generator, or in the first reaction zone thereof in a two-stage process (and optionally in the second reaction zone therein), depends in general on the carbon to hydrogen ratio of the feedstock and the oxygen content of the oxidant stream. Suitable temperature moderators include steam, water, CO₂-rich gas, liquid CO₂, recycle synthesis gas, a portion of the cooled clean exhaust gas from a gas turbine employed downstream in the process with or without admixture with air, by-product nitrogen from the air separation unit used to produce substantially pure oxygen, and mixtures of the aforesaid temperature moderators. Water serves as the carrier and the temperature moderator with slurries of liquid hydrocarbon fuels and solid carbonaceous fuel. However, steam may be the temperature moderator with slurries of liquid hydrocarbon fuels and solid carbonaceous fuel. Generally, a temperature moderator is used with liquid hydrocarbon fuels and with substantially pure oxygen. The temperature moderator may be introduced into the gas generator in admixture with either the solid carbonaceous fuel feed, the free-oxygen containing steam, or both. Alternatively, the temperature moderator may be introduced into the reaction zone, or the first and/or second reaction zones, of the gas generator by way of a separate conduit in the fuel burner. When H₂O is introduced into the reaction zone, or the first and/or second reaction zones, of the gas generator either as a temperature moderator, a slurrying medium, or both, the weight ratio of water to the solid carbon in the solid carbonaceous fuel plus liquid hydrocarbon fuel if any, is in the range of about 0.3 to 2.0 and preferably in the range of about 0.5 to 1.0.

The term free-oxygen containing gas, as used herein, is intended to include air, oxygen-enriched air, i.e. greater than 21 mole % oxygen, and substantially pure oxygen, i.e. greater than 95 mole % oxygen, (the remainder comprising N₂ and rare gases). Free-oxygen containing gas may be introduced into the burner at a temperature in the range of about ambient to 649°C (1200°F). The atomic ratio of free-oxygen in the oxidant to carbon in the feed stock (0/C atom/atom) is preferably in the range of about 0.7 to 1.5, such as about 0.80 to 1.2. In a two-stage process, substantially no supplementary free-oxygen is introduced into the second reaction zone other than that in the raw effluent gas stream from the first reaction zone.

The relative proportions of solid carbonaceous fuel, liquid hydrocarbon fuel if any, water or other temperature moderator, and oxygen in the feed streams to gas generator, are carefully regulated to convert a substantial portion of the carbon in the fuel feed to the partial oxidation gas generator e.g. 75 to 95 wt. %, such as 80 to 90 wt. % of the carbon to carbon oxides e.g. CO and CO₂ and to maintain an autogenous reaction zone temperature in the range of about 1038°C to 1593°C (1900°F to 2900°F) and above the ash-fusion temperature of the slag formed in the reaction zone. Advantageously, with sulfur-containing solid carbonaceous feeds, the ash in the solid carbonaceous fuel forms molten slag at such reaction temperatures. Molten slag is much easier to separate from the hot effluent gas than fly-ash. Further, the hot effluent gas leaves the reaction zone at the proper temperature and pressure for the next step in the process. The pressure in the reaction zone is in the range of about 0.2 to 25 MPa (2 to 250 atmospheres). The time in the reaction zone of the partial oxidation gas generator in seconds is in the range of about 0.5 to 10, such as normally about 1.0 to 5.

The effluent gas stream leaving the partial oxidation gas generator has the following composition in mole % depending on the amount and composition of the feedstreams: H₂ 8.0 to 60.0, CO 8.0 to 70.0, CO₂ 1.0 to 50.0, H₂O 2.0 to 50.0, CH₄ 0.0 to 2.0, H₂S plus COS 0.10 to 2.0, N₂ 0.0 to 80.0, and A 0.0 to 2.0. Trace amounts of the following gaseous impurities may be also present in the effluent gas stream in parts per million (ppm): HCN 0 to 100; such as about 2 to 20; HCl 0 to about 20,000, such as about 200 to 2,000; and NH₃ O to about 10,000, such as about 100 to 1000. Entrained in the effluent gas stream is about 0.5 to 20 Wt. %, such as 1 to 4 wt. % particulate carbon (basis weight of carbon in the feed to the gas generator) comprising the remaining portion of the unconverted ash-containing solid carbonaceous fuel feed and/or soot. Molten slag resulting from the fusion of the ash content in the coal or fly-ash is also entrained in the gas stream leaving the generator.

In one embodiment, at least a portion e.g. about 20 to 100 volume % of the effluent gas stream leaving the reaction zone of partial oxidation gas generator at a temperature in the range of about 1038°C to 1593°C (1900°F to 2900°F), is passed through the unobstructed central axial passage of a radiant cooler. The iron-containing additive may be introduced into the hot effluent gas stream at the entrance to and/or at one or more locations within the radiant cooler. Sufficient iron-containing additive is introduced into the hot effluent gas stream so as to provide in the radiant cooler a weight ratio of iron-containing additive to sulfur plus ash in the fuel feed in the range of about 0.5-10.0 to 1.0. The hot effluent gas stream from the gas generator may be passed in a downward or upward direction through the radiant cooler. For example, a radiant cooler may be connected directly in succession to the discharge outlet of the gas generator, in an arrangement such as shown in U.S. Patent No. 2,801,158 and in coassigned U. S. Patent No. 3,551,347, which are incorporated herein by reference.

In one embodiment, refractory-lined first and/or second slag and residue separation chambers may be connected between the discharge outlet of the reaction zone of the gas generator and the inlet to the radiation cooler for separation of a portion of the entrained matter by gravity. For example, see coassigned U. S. Pat. No. 4,251,228, which is incorporated herein by reference. By this means, a portion of the combustion residue entrained in the effluent gas stream leaving the reaction zone may be removed prior to the radiant cooler. This may be done with substantially no reduction in temperature of the effluent gas stream by gravity and/or gas-solids separation means, such as by cyclone or impingement separators. This mode is shown and described in coassigned U. S. Patent Numbers 4,328,006 and 4,377,394, which are incorporated herein by reference.

Any suitable radiant cooler, such as those in the previously mentioned references, may be used in the subject process. The radiant cooler essentially comprises an elongated cylindrically shaped vertical pressure vessel. The steel walls of the vessel are lined on the inside with a tube-wall which may extend through the full length of the vessel. A coolant such as cooling water or water and steam flows through the individual tubes of the tube-wall. By this means the outer shell of the radiant cooler is protected against the hot gas stream flowing freely through the unobstructed longitudinal central passage of the vessel which is surrounded by said tube-wall. The tube-wall comprises a plurality of adjacent contacting rows of vertical tubes or coils in a concentric ring that is radially spaced from the central longitudinal axis of the vessel.

In one embodiment, a plurality of thin-walled vertical tubes with or without side fins line the inside walls of the radiant cooler. The adjacent rows of tubes are longitudinally welded together to make an annular gas-tight wall of tubes. The lower and upper ends of each said tubes may be respectively connected to lower and upper annular shaped headers. When the coolant in the tube wall is water or a mixture of water and steam , the highest temperature that the pressure shell can reach is the temperature of the saturated steam within the radiant cooler. Boiler feed water is introduced into the bottom header and then passes up through the plurality of separate upright tubes into the top header. The mixture of steam and water is removed from the top header and introduced into an external steam drum where separation takes place. The saturated steam removed from the steam drum may be used elsewhere in the process to provide heat or power. Optionally, at least a portion of the saturated steam may be superheated. The hot water separated in the steam drum may be returned to the bottom header of the radiant cooler. Optionally, for cleaning and maintenance, a plurality of nozzles may be secured on the outside of the tube-wall. By this means, a stream of water, steam or air may be directed against the tube-wall. Thus, the tube-wall may be washed down with water, and any slag deposited thereon may be removed by the wash water. In one embodiment, the inside surfaces of the radiant cooler and the outside surfaces of the tubing in the radiant cooler are provided with a protective metal which substantially reduces any sticking or build-up of slag. See coassigned U. S. Patent Application Serial Number 45,632, filed May 4, 1987, which is incorporated herein by reference.

The hot effluent gas stream may enter through either end of the vertical radiant cooler and freely flow through the unobstructed central core. The temperature of the hot effluent gas stream is steadily reduced as it flows through the radiant cooler. By radiation and convection, a portion of the sensible heat in the hot effluent gas stream is absorbed by indirect heat exchange with the cooling water and steam flowing inside of the tube-wall. The temperature of the gas stream is primarily controlled by this means.

The iron-containing additive having a particle size (microns) in the range of about 1.0 to 1000, such as about 5.0 to 100, may be sprayed into the effluent gas stream at the entrance to or within the radiant cooler by means of spray nozzles, aspirators or atomizers. Any suitable number and arrangement of spray nozzles, aspirators, atomizers, or other suitable mixing means may be employed which allow the iron-containing material to intimately contact and mix with the hot effluent gas stream For example, at least one spray nozzle may be located within the radiant cooler at the entrance so that the entering hot effluent gas stream may be immediately contacted by an atomized spray of iron-containing additive. At least one spray nozzle for spraying iron-containing material may be longitudinally spaced at various levels at and/or beyond the entrance of the radiant cooler.

In one embodiment, an aqueous slurry of iron-containing additive material having a solids content in weight % in the range of about 30 to 90, such as about 60 to 80, and at a temperature in the range of about ambient to 93°C (200°F). is mixed with the hot effluent gas stream from the partial oxidation gas generator. The rate of introduction and concentration of the slurry are such that after the water carrier is vaporized the weight ratio of the iron-containing additive that becomes intimately associated with the sulfur-containing gases and any molten slag and/or ash particles in the effluent gas passing through the radiant cooler is in the range of about 0.5 to 10.0 parts by wt. of iron-containing additive for each part by wt. of sulfur plus ash in the fuel feed. The dwell time of the hot gas stream passing through the radiant cooler is in the range of about 5 to 50 seconds, such as about 15 to 40 seconds. In another embodiment, the iron-containing additive is entrained in a gaseous medium selected from the group consisting of steam, air, CO₂, N₂, recycle synthesis gas, and mixtures thereof.

In another embodiment, the iron-containing additive is iron carbonyl, i.e. Fe(CO)₅. Iron penta carbonyl, is a viscous yellow liquid with a boiling point 39°C (102.8 °C). It may be prepared by reacting iron or iron oxide with CO or a CO-rich gas at a temperature of about 93°C (200°C). A portion of the CO-rich gas produced by the subject partial oxidation process and having a CO content of 30 volume % or more e.g. 50 to 70 volume % may be used in the preparation of iron penta carbonyl. Iron penta carbonyl in the liquid or vapor phase, may be easily mixed with the hot raw effluent gas stream from the partial oxidation reaction zone. Advantageously, there are no grinding costs when this iron-containing additive is used in the subject process.

By the subject process, in the radiant cooler at least a portion e.g. 50 to 100 wt. %, such as about 70 to 95 wt. % of the sulfur originally present in the fuel feed and in the form of sulfur-containing gases e.g. H₂S, COS react with the iron-containing additive to produce particulate matter comprising iron oxysulfide. Substantially no new elemental iron is formed in the radiant cooler from iron-containing additive compounds. By definition, iron oxysulfide is iron sulfide in solution with iron oxide. The iron sulfide may be present in the solution in the range of about 10 to 99 wt. %, and the remainder may comprise iron oxide. Further, the mole % H₂S + COS in the effluent gas stream from the gas generator is reduced from a mole % of about 0.10 to 2.0 to less than about 0.05 mole % by the subject process.

The iron-containing additive may comprise an inorganic or an organic iron compound. In one embodiment, the iron containing portion of said iron-containing additive is ferro or ferri organic compound selected from the group consisting of naphthenates, oxalates, acetates, citrates, benzoates, oleates, tartrates, and mixtures thereof. Preferably, the iron-containing additive is elemental iron or an iron compound selected from the group consisting of oxides, carbonates, cyanides, chlorides, nitrates, and mixtures thereof.

In another embodiment, a metallic oxide from the group consisting of copper oxide, zinc oxide, calcium oxide and mixtures thereof is mixed with said iron-containing additive. For example from about 1 to 50 wt. %, such as about 2 to 10 wt. %, of said metallic oxide (basis weight of said iron-containing additive) may be mixed with said iron-containing additive. The oxides of copper and/or zinc like the iron oxide, form sulfides. In addition, copper and zinc oxides catalyze the reactions between steam and carbon in the radiant cooler to produce supplemental H₂ + CO₂, and to complete the conversion of any unburned fuel or soot that may eminate from the partial oxidation unit.

In the preferred embodiment, the gas stream enters the radiant cooler at substantially the same temperature as that which it had when it left the reaction zone of the partial oxidation gas generator i.e. about 1038°C to 1593°C (1900°F. to 2900°F)., less any ordinary drop in the lines i.e. about 28°C to 56°C (50°F 100°F) temperature drop. Preferably, the temperature of the entering gas stream is above the ash-fusion temperature of any slag that may be entrained in the gas stream. The partially cooled gas stream leaves at the opposite end of the radiant cooler after its temperature has been reduced to a temperature in the range of about 538°C to 871°C (1000°F-1600°F), such as about 732°C to 816°C (1350°F - 1500°F). The pressure of the gas stream in the radiant cooler is substantially the same as that in the gas generator, less ordinary pressure drop in the lines i.e. about 1.01 x 10⁻¹ MPa (1 atmosphere) pressure drop. At these temperatures and pressures, sulfur-containing gases e.g. H₂S and COS that are produced in the partial oxidation reaction zone along with the effluent gas stream comprising H₂ + CO react with the iron-containing additive to produce iron oxysulfide. From about 50 to 100 wt. %, such as about 70 to 95 wt. % of the iron oxysulfide leaves the radiant cooler in the form of discrete particles entrained in the effluent gas stream. A portion of the newly formed particles of iron oxysulfide e.g. about 0 to 10 wt. % and/or iron-containing additive combines with molten slag and/or ash in the hot raw gas stream passing through the radiant gas cooler. The molten slag produced thereby has a reduced ash fusion temperature and a reduced viscosity in comparison with those values for the slag entering the radiant cooler. Molten slag in the gas stream passing through the radiant cooler may be converted into solid particles when its temperature falls below the melting point of the slag. At least a portion e.g. about 10 to 100 wt. % of the molten and solid slag particles may be separated from the hot raw gas stream by gravity and may be collected in a separation vessel located below the radiant cooler. The remainder of the slag, if any, may leave the radiant cooler entrained in the cooled gas stream. In one embodiment, at least a portion of the molten and/or solid slag particles are discharged for example, from the lower end or entrance to the vertical radiant cooler and are collected in a catch pot or quench tank located at the bottom of the radiant cooler. See slag chamber 53 of coassigned U. S. Patent No. 4,328,006, which is incorporated herein by reference.

The remaining particles of iron oxysulfide leave the radiant cooler suspended in the cooled effluent gas stream. The particles of iron oxysulfide and particulate carbon e.g. uncoverted fuel particles and/or soot are separated from the effluent gas stream by conventional gas-solids separation means, and from about 0 to 100 wt. %, such as about 10 to 50 wt. %, may be recycled to the reaction zone of the partial oxidation gas generator in admixture with the fuel feed. In one embodiment, the particles of iron oxysulfide and carbon-containing material are separated from the partially cooled and desulfurized stream of synthesis gas leaving the radiant cooler by means of a cyclone separator or impingement separator of the types shown in coassigned U. S. Patent Numbers 4,328,006 and 4,377,394, which are incorporated herein by reference. The remainder e.g. about 100 to 0 wt. % of this separated particulate matter comprising iron oxysulfide and particulate carbon may be roasted to produce iron oxide and sulfur-containing gas. The iron oxide and a substantially small amount of other particulate solids, if any, e.g. less than about 1.0 wt. % of ash are then separated from the sulfur-containing gases by conventional gas-solids separation means. The iron oxide may be recycled to the radiant cooler where it is introduced in admixture with make-up iron-containing additive entrained in a liquid or gaseous carrier. Alternatively, a portion of the iron oxide may be recycled to the reaction zone of the partial oxidation gas generator in admixture with said heavy liquid hydrocarbonaceous and/or solid carbonaceous fuel. In one embodiment, prior to roasting, the separated particulate matter is classified e.g. screened to remove material having a particle size greater than about 100 microns. This oversized material is rich in non-iron sulfide material e.g. silicates. In one embodiment, at least a portion e.g. 10 to 100 wt. % of said oversized material is mixed with the sulfur-containing heavy liquid hydrocarbonaceous fuel feed and/or the sulfur-containing solid carbonaceous fuel feed and introduced into the reaction zone of the partial oxidation gas generator as an ash-fusion temperature modifying agent comprising iron oxysulfide and particulate carbon.

Advantageously, in the subject process the catalytic reaction between carbon monoxide and steam may take place in the radiant cooler to produce additional hydrogen and carbon dioxide. In addition, carbon and steam may react in the radiant cooler to produce additional hydrogen and carbon oxides. The iron-containing additive material will catalyze these reactions.

Advantageously, useful thermal energy may be recovered from exothermic reactions that take place in the radiant cooler. By indirect heat exchange between the gas stream flowing through the central passageway of the radiant cooler and the cooling water flowing through the tube-wall, by-product steam may be produced.

The comparatively clean and partially cooled gas stream may leave the downstream end of the gas solids separation zone at a temperature below the maximum safe operating temperature for downstream devices used to recover energy from the hot gas stream such as a conventional convection type gas cooler, an expansion turbine for the production of mechanical or electrical energy, or both. The gas stream may be then passed through a downstream convection-type gas cooler or some other energy utilizing means where its temperature is reduced to a range of about 66°C to 321°C (150° to 600°F). The gas stream may be then optionally subjected to additional process steps including gas scrubbing, methanation reactions, and purification, depending on its intended use as a synthesis gas, reducing gas, or fuel gas.

The present invention also provides a continuous two-stage process for the production of a desulfurized stream of synthesis gas, fuel gas, or reducing gas from sulfur-containing heavy liquid hydrocarbonaceous fuel and/or sulfur-containing solid carbonaceous fuel in a liquid or gaseous carrier. The hot effluent gas stream is produced in a first partial oxidation reaction zone. Sulfur-containing gases are then removed from the effluent gas stream in-situ in a second reaction zone at a temperature which is lower than that in the first reaction zone.

A typical down-flowing partial oxidation synthesis gas generator for use in the first stage is shown in coassigned U.S. Patent No. 2,818,326, which is incorporated herein by reference. The gas generator is a vertical cylindrical steel pressure vessel lined on the inside with a thermal refractory material to provide the first reaction zone R₁. The second reaction zone R₂ is located downstream from the first reaction zone R₁. R₁ and R₂ may be two down-flowing, two up-flowing, or one down-flowing and one up-flowing vertical cylindrical shaped coaxial chambers. In one embodiment, R₁ and R₂ are two chambers connected in series by means of a coaxial passage having a diameter which is smaller than one or both chambers. For example, down-flowing vertical serially connected chambers are illustrated in Fig. 1 of coassigned U.S. Patent No. 4,547,203, which is incorporated herein by reference. For purposes of the subject invention chamber 4 of Fig. 1 may serve as R₁; and, chamber 50 may serve as R₂. Intervening chamber 23 and side transfer line 27 may or may not be used.

The apparatus shown and described in coassigned U. S. Patent No. 4,328,006, which is incorporated herein by reference may be also used for carrying out the subject invention. As shown in Fig. 1 of said embodiment, the hot effluent gas from the first down-flowing reaction zone 2 e.g. R₁ passes down through passage 5 into first gas diversion and residue separation chamber 4. Particulate solids and slag in the effluent gas stream drop out of the gas stream by gravity and fall through central outlet 30 into slag chamber 6. Quench water 31 may be contained in the bottom of chamber 6, or it may be dry. About 0 to 20 vol. % of the hot effluent gas may be diverted through chamber 6 as bleed gas. The remainder of the hot effluent gas is passed through outlet 43 and refractory 45 lined transfer line into second gas diversion and residue separation chamber 46. Solid material and slag drop through outlet 49 into second slag chamber 53. The hot gas stream passes upwardly through chamber 46 into the bottom of cooling section 65 where noncontact indirect heat exchange takes place with water. The second reaction zone e.g. R₂ may be chamber 4 or 46. A gas-solids separation device, such as cyclones 100 and 100a, may be used to separate solid particulate matter from the gas stream.

In another embodiment suitable, up-flowing serially connected chambers 24 and 25 are shown and described in U. S. Patent No. 2,961,310, which is incorporated herein by reference. Another up-flowing gasifier is shown in U. S. Patent No. 3,963,457. In carrying out the subject invention, chamber 24 of U. S. Patent No. 2,961,310 may be used as R₁, and chamber 25 may be used as R₂. In the down-flowing mode, a burner is located in the top of the gas generator along the central vertical axis for introducing the feed streams into the first reaction zone. A suitable annulus-type burner is shown in coassigned U. S. Pat. No. 2,928,460 which is incorporated herein by reference. A suitable annulus type burner may be used to introduce feedstreams of fuel, H₂O and/or CO₂, and iron-containing additive into the second reaction zone by way of a passage in the side wall of the vessel. For side wall burner installations, see Figs. 1 and 2 of coassigned U. S. Patent No. 4,647,294, which is incorporated herein by reference.

In still another embodiment of the subject process reaction zones R₁ and R₂ are coaxial and horizontally oriented. This embodiment may be carried out by the apparatus shown in coassigned U. S. Patent No. 3,784,364, which is incorporated herein by reference. In accordance with this embodiment, a liquid hydrocarbonaceous material, steam and/or CO₂, iron-containing additive, and the effluent gas stream from the first partial oxidation gas generator R₁ are passed through the second generator R₂ where desulfurization and reactions between carbon and steam and/or CO₂ take place in the manner previously described. The temperature in the first and second reaction zones, e.g., generators 11 and 23 are preferably below the softening temperature of the ash, e.g., about 6-56°C (10-100°F) below in said reaction zones. Advantageously, by operating at a lower temperature and in the fly-ash mode, more sulfur may be retained in the fly-ash than that which can be retained in molten slag. Further, the amount of iron-containing additive is reduced since substantially no iron silicates are formed. However, in comparison with operating R₁ and R₂ in the slagging mode, carbon conversion is reduced and gas cleaning is more difficult by operating in the fly-ash mode.

The relative proportions of solid carbonaceous fuel, liquid hydrocarbon fuel if any, water or other temperature moderator, and oxygen in the feed streams to the first reaction zone in the gas generator, are carefully regulated to convert a substantial portion of the carbon in the fuel feed to the partial oxidation gas generator e.g. 85 to 99 wt. %, such as 80 to 95 wt. % of the carbon to carbon oxides e.g. CO and CO₂ and to maintain an autogeneous reaction zone temperature in the first reaction zone to a temperature in the range of about 1038°C to 1593°C (1900°F to 2900°F) and above the ash-fusion temperature of the slag formed in the reaction zone. The ash in the solid carbonaceous fuel may form fly-ash, molten slag, or mixtures thereof depending upon the actual temperature in the reaction zone. Molten slag is much easier to separate from the hot effluent gas than fly-ash. The pressure in the first and second reaction zones is in the range or about 0.2 to 25 MPa (2 to 250 atmospheres). The pressure in the second reaction zone is substantially the same as that in the first reaction zone less ordinary pressure drop in the lines. The dwell time in the first reaction zone of the partial oxidation gas generator in seconds is in the range of about 0.5 to 10, such as about 1.0 to 5. The dwell time in the second reaction zone in seconds is in the range of about 5 to 50, such as about 15 to 40 seconds.

The effluent gas stream leaving the first reaction zone in the partial oxidation gas generator has the composition as described hereinbefore.

The iron-containing additive may be introduced into the hot effluent gas stream at the entrance to and/or at one or more locations within the second reaction zone. Sufficient iron-containing additive is introduced into the hot effluent gas stream so as to provide in the second reaction zone R₂ iron atoms in the amount of about 1.1 to 1.8 times the atoms of sulfur in the second reaction zone R₂ plus about 0.3 to 1.2 times the atoms of silicon in the ash in the second reaction zone R₂. Further, the mole ratio of H₂O and/or CO₂ in the second reaction zone to the total amount of carbon in the second portion of fuel introduced into the second reaction zone plus the carbon in the unreacted fuel and particulate matter entrained in the hot raw effluent gas stream entering the second reaction zone R₂ is in the range of about 0.7 to 25, such as about 1.0 to 20. The hot effluent gas stream from the gas generator may be passed in a downward or upward direction through the second reaction zone.

The iron-containing additive having a particle size (microns) in the range of about 1.0 to 1000, such as about 5.0 to 100, may be sprayed into the effluent gas stream at the entrance to or within the second reaction zone R₂ by means of spray nozzles, aspirators or atomizers. Any suitable number and arrangement of spray nozzles, aspirators, atomizers, or other suitable mixing means may be employed which allow the iron-containing material to intimately contact and mix with the hot effluent gas stream. For example, at least one spray nozzle may be located within the second reaction zone R₂ at the entrance so that the entering hot effluent gas stream may be immediately contacted by an atomized spray of iron-containing additive. At least one spray nozzle for spraying iron-containing material may be longitudinally spaced at various levels at and/or beyond the entrance of the second reaction zone R₂ e.g. along the central axis.

In one embodiment, an aqueous slurry comprising a second portion of sulfur-containing solid carbonaceous fuel in admixture with iron-containing additive material and having a solids content in weight % in the range of about 30 to 90, such as about 60 to 80, and at a temperature in the range of about ambient to 93°F (200°F.) is mixed in the second reaction zone R₂ with the hot effluent gas stream from the first reaction zone located in the partial oxidation gas generator. The rate of introduction and concentration of the slurry are such that after the water carrier is vaporized, the iron-containing additive that becomes intimately associated with the sulfur-containing gases and any molten slag and/or ash particles in the effluent gas passing through the second reaction zone R₂ provides iron atoms in the amount of about 1.1 to 1.8 times the atoms of sulfur in the second reaction zone R₂ plus about 0.3 to 1.2 times the atoms of silicon in the ash in the second reaction zone R₂. In another embodiment, the iron-containing additive is entrained in a gaseous medium selected from the group consisting of steam, air, CO₂, N₂, recycle synthesis gas, and mixtures thereof. A suitable apparatus for carrying out this mode is illustrated in Fig. 1 of coassigned U.S. Patent No. 4,248,604, which is incorporated herein by reference. In this embodiment, partial oxidation of a first portion of a slurry of sulfur-containing coal or other carbonaceous solid fuel e.g. petroleum coke takes place in the first reaction zone R₁- e.g. reference No. 16. A first portion of the hot raw effluent gas stream is mixed in the second reaction zone R₂-e.g. refractory lined antichamber 51 with a gas-solid mixture that is introduced into antichamber 51 via line 63 and comprising particles of a second portion of sulfur-containing coal or other sulfur-containing liquid hydrocarbonaceous or solid carbonaceous fuel in admixture with an iron-containing additive which is entrained in a cooled and cleaned stream of recycle product gas. The following reactions take place in the second reaction zone R₂: (i) devolatilizing of the second portion of said sulfur-containing fuel; (ii) reaction of carbon from said second portion of sulfur-containing fuel and carbon from any unreacted portion of said first portion of sulfur-containing fuel with H₂O and/or CO₂ in the presence of an iron-containing additive to produce with an increased reaction rate additional H₂ and carbon oxides; (iii) conversion of sulfur in said second portion of sulfur-containing fuel into sulfur containing gases e.g. H₂S and COS; and (iv) desulfurization by the reaction between the sulfur containing gases and the iron-containing additive to produce particles of iron oxysulfide. The entrained particulate matter, including iron oxysulfide and slag particles, is separated from the hot raw stream of synthesis gas by means of cyclone 56 and is passed out of antichamber 51 via bottom outlet 52. The material in line 59 may be ground and mixed with the sulfur-containing coal slurry fuel to gas generator 11, as an ash fusion temperature modifier. Alternatively, it may be roasted and processed to produce iron oxide which is recycled to antichamber 51. Further cooling and scrubbing of the raw stream of synthesis gas in line 64 may be accomplished in shell and tube gas coolers 65 and 66, and in gas scrubber 121. The cooled and cleaned synthesis gas leaves via line 159.

By the subject process, in the second reaction zone R₂, at least a portion e.g. 50 to 100 wt. %, such as about 70 to 95 wt. % of the sulfur originally present in the fuel feed and now in the form of sulfur-containing gases e.g. H₂S, COS react with the iron-containing additive to produce particulate matter comprising iron oxysulfide. Substantially no new elemental iron is formed in the second reaction zone from iron-containing additive compounds. By definition, iron oxysulfide is iron sulfide in solution with iron oxide. The iron sulfide may be present in the solution in the range of about 10 to 99 wt. %, and the remainder may comprise iron oxide. Further, the mole % H₂S + COS in the effluent gas stream from the gas generator is reduced from a mole % of about 0.10 to 2.0 to less than about 0.05 mole % in the product gas by the subject process.

The iron-containing additive may comprise an inorganic or an organic iron compound. In one embodiment, the iron containing portion of said iron-containing additive is ferro or ferri organic compound selected from the group consisting of naphthenates, oxalates, acetates, citrates, benzoates, oleates, tartrates, and mixtures thereof. Preferably, the iron-containing additive is elemental iron or an iron compound selected from the group consisting of oxides, carbonates, nitrates, and mixtures thereof.

In another embodiment, the iron-containing additive is iron penta carbonyl, i.e. Fe(CO)₅. Iron penta carbonyl, is a viscous yellow liquid with a boiling point of 39°C (102.8 °C.) It may be prepared by reacting iron or iron oxide with CO or a CO-rich gas at a temperature of about 93°C (200°C). A portion of the CO-rich gas produced by the subject partial oxidation process and having a CO content of 30 volume % or more e.g. 50 to 70 volume % may be used in the preparation of iron penta carbonyl. Iron penta carbonyl in the liquid or vapor phase, may be easily mixed with the hot raw effluent gas stream from the partial oxidation reaction zone. Advantageously, there are no grinding costs when this iron-containing additive is used in the subject process.

In another embodiment, a metallic oxide from the group consisting of copper oxide, zinc oxide, calcium oxide and mixtures thereof is mixed with said iron-containing additive. For example from about 1 to 50 wt. %, such as about 2 to 10 wt. %, of said metallic oxide (basis weight of said iron-containing additive) may be mixed with said iron-containing additive. The oxides of copper and/or zinc like the iron oxide, form sulfides. In addition, copper and zinc oxides catalyze the reactions between steam and carbon in the second reaction zone R₂ to produce supplemental H₂ and carbon oxide gases, and to complete the conversion of any unburned fuel or soot that may emanate from the partial oxidation unit.

In the preferred embodiment, the gas stream enters the second reaction zone R₂ at substantially the same temperature as that which it had when it left the first reaction zone R₁ of the partial oxidation gas generator i.e. about 1038°C to 1593°C (1900 °F to 2900°F.), less any ordinary drop in the lines i.e. about 28°C to 56°C (50°F to 100°F) temperature drop. Preferably, the temperature of the entering gas stream is above the ash-softening temperature of any ash that may be entrained in the gas stream. The gas stream leaves at the opposite end of the second reaction zone R₂ after its temperature has been reduced to a temperature in the range of about 538°C to 1566°C (1000°F-2850°F), such as about 732°C to 982°C (1350°F-1800°F). The pressure of the gas stream in the second reaction zone R₂ is substantially the same as that in the gas generator, less ordinary pressure drop in the lines i.e. about 1 atmosphere pressure drop. At these temperatures and pressures, sulfur-containing gases e.g. H₂S and COS that are produced in the partial oxidation reaction zone R₁ along with the effluent gas stream comprising H₂ + CO react with the iron-containing additive to produce iron oxysulfide. From about 50 to 100 wt. %, such as about 70 to 95 wt. % of the iron oxysulfide leaves the second reaction zone R₂ in the form of discrete particles entrained in the effluent gas stream. A portion of the newly formed particles of iron oxysulfide e.g. about 0 to 10 wt. % and/or iron-containing additive combines with molten slag and/or ash in the hot raw gas stream passing through the second reaction zone R₂. The molten slag produced thereby has a reduced ash fusion temperature and a reduced viscosity in comparison with those values for the slag entering the second reaction zone R₂. Molten slag in the gas stream passing through the second reaction zone R₂ may be converted into solid particles when its temperature falls below the melting point of the slag. At least a portion e.g. about 10 to 100 wt. % of the molten and solid slag particles may be separated from the hot raw gas stream by gravity and may be collected in a separation vessel. The remainder of the slag, if any, may leave the second reaction zone R₂ entrained in the partially cooled gas stream. In one embodiment, the partially cooled gas stream leaving the second reaction zone R₂ is passed through a gas cooler e.g. radiant cooler. At least a portion of the molten and/or solid slag particles are discharged for example, from the lower end or entrance to the vertical radiant cooler and are collected in a catch pot or quench tank located at the bottom of the radiant cooler. See slag chamber 53 of coassigned U. S. Patent No. 4,328,006, which is incorporated herein by reference. The remaining particles of iron oxysulfide leave the radiant cooler suspended in the cooled effluent gas stream. The particles of iron oxysulfide and particulate carbon e.g. uncoverted fuel particles and/or soot are separated from the effluent gas stream by conventional gas-solids separation means, and from about 0 to 100 wt. %, such as about 10 to 50 wt. %, may be recycled to the reaction zone of the partial oxidation gas generator in admixture with the fuel feed. In one embodiment, the particles of iron oxysulfide and carbon-containing material are separated from the cooled and desulfurized stream of synthesis gas leaving the radiant cooler by means of a cyclone separator or impingement separator of the types shown in coassigned U. S. Patent Numbers 4,328,006 and 4,377,394, which are incorporated herein by reference. The remainder e.g. about 100 to 0 wt. % of this separated particulate matter comprising iron oxysulfide and particulate carbon may be roasted to produce iron oxide and sulfur-containing gas. The iron oxide and a substantially small amount of other particulate solids, if any, e.g. less than about 1.0 wt. % of ash are then separated from the sulfur-containing gases by conventional gas-solids separation means. The iron oxide may be recycled to the second reaction zone R₂ where it is introduced in admixture with make-up iron-containing additive and a second portion of the sulfur-containing liquid hydrocarbonaceous or solid carbonaceous fuel. Alternatively, a portion of the iron oxide may be recycled to the first reaction zone R₁ in the partial oxidation gas generator in admixture with said heavy liquid hydrocarbonaceous and/or solid carbonaceous fuel. In one embodiment, prior to roasting, the separated particulate matter is classified e.g. screened to remove material having a particle size greater than about 100 microns. This oversized material is rich in non-iron sulfide material e.g. silicates. In one embodiment, at least a portion e.g. 10 to 100 wt. % of said oversized material is mixed with the sulfur-containing heavy liquid hydrocarbonaceous fuel feed and/or the sulfur-containing solid carbonaceous fuel feed and introduced into the reaction zone of the partial oxidation gas generator as an ash-fusion temperature modifying agent.

Advantageously, in the subject process the catalytic reaction between carbon monoxide and steam may take place in the second reaction zone R₂ to produce additional hydrogen and carbon dioxide. In addition, carbon and steam may react in the second reaction zone R₂ to produce additional hydrogen and carbon oxides. The iron-containing additive material will catalyze these reactions.

Advantageously, useful thermal energy may be recovered from the hot effluent gas stream leaving the second reaction zone R₂ by passing it through a gas cooler. For example, by indirect heat exchange between the gas stream flowing through the central passageway of the radiant cooler and the cooling water flowing through the tube-wall, by-product steam may be produced.

The comparatively clean and partially cooled gas stream may leave the downstream end of the gas solids separation zone at a temperature below the maximum safe operating temperature for downstream devices used to recover energy from the hot gas stream such as a conventional convection type gas cooler, an expansion turbine for the production of mechanical or electrical energy, or both. The gas stream may be then passed through a downstream convection-type gas cooler or some other energy utilizing means where its temperature is reduced to a range of about 66°C to 316°C (150° to 600°F). The gas stream may be then optionally subjected to additional process steps including gas scrubbing, methanation reactions, and purification, depending on its intended use as a synthesis gas, reducing gas, or fuel gas.

In another embodiment of a two-stage process, similar to that described above except that a calcium-containing additive is used, it was unexpectedly found that a sufficiently low equilibrium oxygen concentration in the gas phase which is less than about 1.01 x 10⁻¹³ MPa (10⁻¹² atmospheres) is preferably required in reaction zones R₁ and R₂ for the calcium atoms to capture substantially all of the sulfur atoms in the second reaction zone R₂. While the required low equilibrium oxygen concentrations may be achieved with various combinations including minimum amounts of pure oxygen, H₂ O and CO₂ in reaction zones R₁ and R₂, air gasification of the sulfur-containing fuel feed in R₁ in the presence of a temperature moderator comprising nitrogen or recycle product gas is a preferred mode of operation. The use of a temperature moderator to moderate the temperature in the first reaction zone of the gas generator and optionally in the second reaction zone depends in general on the carbon to hydrogen atomic ratio of the feedstock, the oxygen content of the oxidant stream, and the desired low oxygen potential. Suitable temperature moderators include nitrogen, recycle synthesis gas, steam, water, CO₂-rich gas, liquid CO₂, a portion of the cooled clean exhaust gas from a gas turbine employed downstream in the proceed with or without admixture with air, by-product nitrogen from the air separation unit used to produce substantially pure oxygen, and mixtures of the aforesaid temperature moderators. Water serves as the carrier and the temperature moderator with slurries of water and solid carbonaceous fuel. However, steam may be the temperature moderator with slurries of liquid hydrocarbonaceous fuel and solid carbonaceous fuel. Generally, a temperature moderator is used with liquid hydrocarbon fuels and with substantially pure oxygen. The temperature moderator may be introduced into the gas generator in admixture with either the solid carbonaceous fuel feed, the free-oxygen containing gas stream, or both. Alternatively, the temperature moderator may be introduced into the first and/or second reaction zones by way of a separate conduit in the fuel burner. When H₂O is introduced into the first and/or second reaction zones either as a temperature moderator, a slurrying medium, or both, the weight ratio of water to the carbon in the solid carbonaceous fuel plus liquid hydrocarbon fuel if any, is in the range of about 0.3 to 2.0 and preferably in the range of about 0.5 to 1.0.

The term free-oxygen containing gas, as used herein in the first reaction zone is intended to include air, oxygen-enriched air, i.e. greater than 21 mole % oxygen, and substantially pure oxygen, i.e., greater than 95 mole % oxygen, (the remainder comprising N₂ and rare gases). Free-oxygen containing gas may be introduced into the burner at a temperature in the range of about ambient to 649°C (1200°F). The atomic ratio of free-oxygen in the oxidant to carbon in the feed stock (O/C atom/atom) is preferably in the range of about 0.7 to 1.5, such as about 0.80 to 1.2. Substantially no supplementary free-oxygen is introduced into the second reaction zone other than that in the raw effluent gas stream from the first reaction zone.

The relative proportions of solid carbonaceous fuel, liquid hydrocarbon fuel if any, water or other temperature moderator, and oxygen in the feed streams to the first reaction zone in the gas generator, are carefully regulated to convert a substantial portion of the carbon in the fuel feed to the partial oxidation gas generator e.g. 85 to 99 wt. %, such as 80 to 95 wt. % of the carbon to carbon oxides e.g. CO and CO₂ to maintain an autogeneous reaction zone temperature in the first reaction zone at a temperature in the range of about 1038°C to 1593°C (1900°F to 2900°F) and above the ash softening temperature of the slag formed in the reaction zone, and to maintain the equilibrium oxygen concentration in the gas phase with a partial pressure which is less than about 1.01 x 10⁻¹³ MPa (10⁻¹² atmospheres). The ash in the solid carbonaceous fuel forms, molten slag in the first reaction zone. Molten slag is much easier to separate from the hot effluent gas than fly-ash. The pressure in the first and second reaction zones is in the range or about 0.2 to 25 MPa (2 to 250 atmospheres). The pressure in the second reaction zone is substantially the same as that in the first reaction zone less ordinary pressure drop in the lines. The dwell time in the first reaction zone of the partial oxidation gas generator in seconds is in the range of about 0.5 to 10, such as about 1.0 to 5. The dwell time in the second reaction zone in seconds is in the range of about 5 to 50, such as about 15 to 40 seconds.

The effluent gas stream leaving the first reaction zone in the partial oxidation gas generator has the composition as described hereinbefore. Molten slag resulting from the fusion of the ash content in the fuel or fly-ash is also entrained in the gas stream leaving the gas generator R₁.

The calcium-containing additive may be introduced into the hot effluent gas stream at the entrance to and/or at one or more locations within the second reaction zone. Sufficient calcium-containing additive is introduced into the hot effluent gas stream so as to provide in the second reaction zone R₂ , calcium atoms in the amount of about 0.95 to 1.8 times the atoms of sulfur in the second reaction zone R₂ plus about 0.1 to 0.2 times the atoms of silicon in the ash in the second reaction zone R₂. Further the mole ratio of H₂O and/or CO₂ in the second reaction zone to the total amount of carbon in the second portion of fuel introduced into the second reaction zone plus the carbon in the unreacted fuel and particulate matter entrained in the hot raw effluent gas stream entering the second reaction zone R₂ is in the range of about 0.7 to 25, such as about 1.0 to 20. The hot effluent gas stream from the gas generator may be passed in a downward or upward direction through the second reaction zone.

The calcium-containing additive having a particle size (microns) in the range of about 1.0 to 1000, such as about 5.0 to 100, may be sprayed into the effluent gas stream at the entrance to or within the second reaction zone R by means of spray nozzles, aspirators or atomizers. Any suitable number and arrangement of spray nozzles, aspirators, atomizers, or other suitable mixing means may be employed which allow the calcium-containing material to intimately contact and mix with the hot effluent gas stream. For example, at least one spray nozzle may be located within the second reaction zone R₂ at the entrance so that the entering hot effluent gas stream may be immediately contacted by an atomized spray of calcium-containing additive. At least one spray nozzle for spraying calcium-containing material may be longitudinally spaced at various levels at and/or beyond the entrance of the second reaction zone R₂ e.g. along the central axis.

In one embodiment, the fuel feed to the second reaction zone comprises a pumpable slurry of sulfur-containing solid carbonaceous fuel in admixture with calcium-containing additive material having a solids content of about 50-70 wt. % in a liquid carrier selected from the group consisting H₂O, CO₂ and liquid hydrocarbonaceous fuel. However, when the liquid carrier is H₂O or CO₂, prior to introducing said slurry into the second reaction zone, the liquid carrier is skimmed off the slurry to reduce the amount of H₂O to about 5 to 10 wt. % (basis weight of feed), or alternatively to reduce the amount of CO₂ to about 10 to 30 wt. % (basis weight of feed).

After the carrier is vaporized, the calcium-containing additive that becomes intimately associated with the sulfur in the sulfur-containing gases and any molten slag and/or ash particles in the effluent gas passing through the second reaction zone R₂ provides calcium atoms in the amount of about 0.95 to 1.8 times the atoms of sulfur in the second reaction zone R₂ plus about 0.1 to 0.2 times the atoms of silicon in the ash in the second reaction zone R₂. In another embodiment, the calcium-containing additive is entrained in a gaseous medium selected from the group consisting of steam, air, CO₂, N₂, recycle synthesis gas, and mixtures thereof. A suitable apparatus for carrying out this mode is illustrated in Fig. 1 of coassigned U.S. Patent No. 4,248,604, which is incorporated herein by reference. In this embodiment, partial oxidation of a first portion of a slurry of sulfur-containing coal or other carbonaceous solid fuel e.g. petroleum coke takes place in the first reaction zone R₁- e.g. reference No. 16. A first portion of the hot raw effluent gas stream is mixed in the second reaction zone R₂-e.g. refractory lined antichamber 51, with a gas-solid mixture that is introduced into antichamber 51 via line 63 and comprising particles of a second portion of sulfur-containing coal or other sulfur-containing liquid hydrocarbonaceous or solid carbonaceous fuel in admixture with a calcium-containing additive which is entrained in a cooled and cleaned stream of recycle product gas. The following reactions take place in the second reaction zone R₂ e.g. antichamber 51: (i) devolatilizing of the second portion of said sulfur-containing fuel; (ii) reaction of carbon from said second portion of sulfur-containing fuel and carbon from any unreacted portion of said first portion of sulfur-containing fuel with H₂O and/or CO₂ in the presence of a calcium-containing additive to produce with an increased reaction rate additional H₂ and carbon oxides; (iii) conversion of sulfur in said second portion of sulfur-containing fuel into sulfur containing gases e.g. H₂S and COS; and (iv) desulfurization by the reaction between the sulfur containing gases and the calcium-containing additive to produce particles of calcium sulfide. The entrained particulate matter, including calcium sulfide and slag particles, is separated from the hot raw stream of synthesis gas by means of cyclone 56 and is passed out of antichamber 51 via bottom outlet 52. The material in line 59 may be ground and mixed with the sulfur-containing coal slurry fuel to gas generator 11, as an ash temperature modifier. Alternatively, it may be roasted and processed to produce calcium oxide which is recycled to antichamber 51. Further cooling and scrubbing of the raw stream of synthesis gas in line 64 may be accomplished in shell and tube gas coolers 65 and 66, and in gas scrubber 121. The cooled and cleaned synthesis gas leaves via line 159.

By the subject process, in the second reaction zone R₂, at least a portion e.g. 50 to 100 wt. %, such as about 70 to 95 wt. % of the sulfur originally present in the fuel feed and now in the form of sulfur-containing gases e.g. H₂S, COS react with the calcium-containing additive to produce particulate matter comprising calcium sulfide. Further, the mole % H₂S + COS in the effluent gas stream leaving antichamber 51 is reduced from a mole % of about 0.10 to 2.0 to less than about 0.05 mole % by the subject process.

The calcium-containing additive may comprise an inorganic or an organic calcium compound. In one embodiment, the calcium-containing additive is an organic compound selected from the group consisting of formate, oxalate, acetate, stearate, benzoate, tartrate, and mixtures thereof. Preferably, the calcium-containing additive is a calcium compound selected from the group consisting of calcium oxide, calcium hydroxide, calcium carbonate, calcium hydride, calcium nitrate, calcium phosphate, and mixtures thereof.

In the preferred embodiment, the gas stream enters the second reaction zone R₂ at substantially the same temperature as that which it had when it left the first reaction zone R₁ of the partial oxidation gas generator i.e. about 1038°C to 1593°C (1900°F. to 2900°F.), less any ordinary drop in the lines i.e. about 28°C to 56°C (50°F to 100°F) temperature drop. Preferably, the temperature of the entering gas stream is above the ash-softening temperature of any ash that may be entrained in the gas stream. The gas stream leaves at the opposite end of the second reaction zone R₂ after its temperature has been reduced to a temperature in the range of about 538°C to 1566°C (1000°F-2850°F), such as about 732°C to 982°C (1350°F-1800°F). The pressure of the gas stream in the second reaction zone R₂ is substantially the same as that in the gas generator, less ordinary pressure drop in the lines i.e. about 1.01 x 10⁻¹ MPa (1 atmosphere) pressure drop. At these temperatures and pressures, sulfur-containing gases e.g. H₂S and COS that arc produced in the partial oxidation reaction zone R₁ and R₂ react with the calcium-containing additive to produce calcium sulfide. From about 50 to 100 wt. %, such as about 70 to 95 wt. % of the calcium sulfide leaves the second reaction zone R₂ in the form of discrete particles entrained in the effluent gas stream. A portion of the newly formed particles of calcium sulfide e.g. about 0 to 10 wt. % and/or calcium-containing additive combines with slag and/or ash in the hot raw gas stream passing through the second reaction zone R₂. The fly-ash produced thereby has an increased ash softening temperature in comparison with the molten slag entering the second reaction zone R₂. Molten slag in the gas stream passing through the second reaction zone R₂ may be converted into solid particles when its temperature falls below the melting point of the slag. At least a portion e.g. about 10 to 100 wt. % of the fly-ash may be separated from the hot raw gas stream by conventional means e.g. cyclone and/or scrubbing with a liquid hydrocarbonaceous material. The remainder of the fly-ash, if any, may leave the second reaction zone R₂ entrained in the partially cooled gas stream. In one embodiment, the partially cooled gas stream leaving the second reaction zone R₂ is passed through a gas cooler e.g. radiant cooler. By-product steam may be thereby produced by indirect heat exchange. At least a portion of the fly-ash is collected in a catch pot or quench tank located at the lower end or entrance to the vertical radiant cooler. See slag chamber 53 of coassigned U. S. Patent No. 4,328,006, which is incorporated herein by reference. The remaining particles of calcium-sulfide leave the radiant cooler suspended in the cooled effluent gas stream. In one embodiment, the vertical radiant cooler serves as the second reaction zone R₂. The calcium-containing additive is then introduced into the gas stream entering the radiant cooler, or at some other location within the radiant cooler. The particles of calcium sulfide and particulate carbon e.g. uncoverted fuel particles and/or soot may be separated from the effluent gas stream by conventional gas-solids separation means. In one embodiment, the particles of calcium sulfide and carbon-containing material are separated from the cooled and desulfurized stream of synthesis gas leaving the second reaction zone by means of a cyclone separator or impingement separator of the types shown in coassigned U. S. Patent Numbers 4,328,006 and 4,377,394, which are incorporated herein by reference. The separated calcium-sulfide and particulate carbon may be roasted to produce calcium oxide and sulfur-containing gas. The calcium oxide and a substantially small amount of other particulate solids, if any, e.g. less than about 1.0 wt. % or ash are then separated from the sulfur-containing gases by conventional gas-solids separation means. The calcium oxide may be recycled to the second reaction zone R₂ where it is introduced in admixture with make-up calcium-containing additive and a second portion of the sulfur-containing liquid hydrocarbonaceous or solid carbonaceous fuel. In one embodiment, a portion of the calcium oxide may be recycled to the first reaction zone R₁ in the partial oxidation gas generator in admixture with said heavy liquid hydrocarbonaceous and/or solid carbonaceous fuel. In one embodiment, prior to roasting, the separated particulate matter is classified e.g. screened to remove material having a particle size greater than about 100 microns. This oversized material is rich in non-calcium sulfide material e.g. silicates. In one embodiment, at least a portion e.g. 10 to 100 wt. % of said oversized material is mixed within the sulfur-containing heavy liquid hydrocarbonaceous fuel feed and/or the sulfur-containing solid carbonaceous fuel feed and introduced into the reaction zone of the partial oxidation gas generator as an ash-fusion temperature modifying agent.

In one embodiment, the hot raw product gas mixture from the second reaction zone is cooled and cleaned by the steps of (1) contacting said hot raw product gas mixture with a liquid hydrocarbonaceous fuel cooling and scrubbing agent thereby producing a slurry comprising fly-ash and calcium sulfide in liquid hydrocarbonaceous fuel; (2) steam stripping said slurry to produce sulfur-containing gases e.g. H₂S, and calcium oxide; and recycling the sulfur-depleted calcium-containing slurry to the second reaction zone. Sulfur may be recovered from the mixture of steam and H₂S.

Advantageously, in the subject process the catalytic reaction between carbon monoxide and steam may take place in the second reaction zone R₂ to produce additional hydrogen and carbon dioxide. In addition, carbon and steam may react in the second reaction zone R₂ to produce additional hydrogen and carbon oxides. These reactions may be catalyzed by the calcium-containing additive materials.

Advantageously, useful thermal energy may be recovered from the hot effluent gas stream leaving the second reaction zone R₂ by passing it through a gas cooler. For example, by indirect heat exchange between the gas stream flowing through the central passageway of the radiant cooler and the cooling water flowing through the tube-wall, by-product steam may be produced.

The comparatively clean and partially cooled gas stream may leave the downstream end of the gas solids separation zone at a temperature below the maximum safe operating temperature for downstream devices used to recover energy from the hot gas stream such as a conventional convection type gas cooler, an expansion turbine for the production of mechanical or electrical energy, or both. The gas stream may be then passed through a downstream convection-type gas cooler or some other energy utilizing means where its temperature is reduced to a range of about 66°C to 316°C (150° to 600°F). The gas stream may be then optionally subjected to additional process steps including gas scrubbing, methanation reactions, and purification, depending on its intended use as a synthesis gas, reducing gas, or fuel gas.

The advantages achieved by any of the above subject processes in which the iron-containing additive is introduced directly into the radiant cooler or in which the iron-containing or calcium-containing additive in admixture with a second portion of sulfur-containing liquid hydrocarbonaceous and/or solid carbonaceous fuel is introduced directly into the second reaction zone, include the following:
1. A H₂ + CO containing product gas is produced containing a reduced amount of sulfur-containing gases.
2. The gas stream passing through the radiant cooler or the second reaction zone R₂ is desulfurized while the temperature is maintained at a high level e.g. greater than 1000°F.
3. Supplemental H₂ and carbon oxide gases are produced at an increased reaction rate due to the catalytic reaction of carbon and steam in the presence of the iron-containing or the calcium-containing additive.
4. The sensible heat in the effluent gas stream from the partial oxidation gas generator may be efficiently used at high temperatures to provide the necessary energy to initiate and to carry out the desulfurization reaction.
5. The residence time in the partial oxidation gas generator may be reduced. This will result in shorter and less costly gas generators.
6. The thermal refractory lining of the gas generator is not subject to attack by contact with an iron-containing or a calcium-containing material
7. Low grade solid fuels may be used as feed to the partial oxidation gas generator, without costly upgrading.
8. The iron-containing or the calcium-containing additive may be intimately mixed with the sulfur-containing gases in the hot gas stream in the radiant cooler or the second reaction zone R₂. When a liquid carrier is used and it vaporizes, nascent uncontaminated iron-containing or calcium-containing material is released at an elevated temperature. In this active form, the iron-containing or calcium-containing material is intimately mixed with and contacts the sulfur-containing gases and the slag. The conversion rate for the desulfurization and other reactions in R₂ are thereby increased.
9. Separation of the molten slag entrained in the effluent gas stream passing through the radiant cooler or the second reaction zone R₂ may be facilitated. A small portion of the iron-containing or calcium-containing additive and/or newly formed iron oxysulfide or calcium sulfide will react with clay materials in the molten slag to form, for example, insoluble potassium ferro aluminosilicates or calcium aluminosilicates. The melting point of the slag is thereby lowered and its fluidity is increased. In one embodiment, in the lower portion of an up-flowing vertical radiant cooler or second reaction zone R₂ any fluxed molten slag easily separates from the gas stream and drops into a slag chamber located at the bottom of the radiant cooler or the second reaction zone. A pool of water may be contained in the bottom of the slag chamber, or it may be dry. In the remainder of the radiant cooler or the second reaction zone, the temperature of the gas stream is reduced below the softening temperature of the ash in the fuel so that particulate iron oxysulfide or the fly-ash and particulate calcium sulfide may leave the radiant cooler or the second reaction zone R₂ entrained in the gas stream.

In another embodiment, simultaneously with the introduction of the iron-containing or the calcium-containing additive into the radiant cooler or the second reaction zone R₂ , an ash fusion temperature modifying agent or an ash softening temperature additive may be introduced into the partial oxidation reaction zone or first such zone R₁ in admixture with the sulfur-containing liquid hydrocarbonaceous fuel and/or sulfur containing solid carbonaceous fuel. By this means, at least a portion of the molten slag e.g. about 10 to 75 wt. % may be removed from the hot raw effluent gas stream prior to the radiant cooler or the second reaction zone R₂ . In such case, the weight ratio of ash fusion temperature modifying agent or ash softening temperature additive in the feed mixture to the gas generator to ash in the fuel feed is in the range of about 0.5 to 10, such as about 2 to 5. The ash fusion temperature modifying agent or ash-softening temperature additive may be a portion of the previously described iron-containing or calcium-containing additive e.g. about 1 to 75 wt. %, such as 5 to 25 wt. % (basis total weight of iron-containing additive).

In still another embodiment, an alkali metal and/or alkali earth metal catalyst for the reaction between carbon and H₂ O or CO₂ is introduced into the second reaction zone R₂ in admixture with the sulfur-containing liquid hydrocarbonaceous fuel and/or solid carbonaceous fuel and the calcium-containing additive. The catalyst is present in the amount of about 5-50 wt. %, such as about 10-20 wt. % (basis wt. of entrained carbon). The mole ratio H₂O and/or CO₂ to carbon in the hot gas stream passing through the second reaction zone R₂ is in the range of about 0.7 to 25.0, or more, such as about 1.0 to 20, say about 1.5 to 6. Advantageously, unwanted HCN and HCl may be hydrolyzed in the presence of alkali metal and/or alkaline earth metal catalysts. The alkali metal and/or alkaline earth metal constituents are selected from the metals in the Periodic Table of Elements in Group IA and/or IIA.

In one embodiment the sulfur-containing heavy liquid hydrocarbonaceous fuel and/or sulfur-containing solid carbonaceous fuel have ashes that include a minimum of 5.0 wt. % of vanadium, a minimum of 2.0 wt. % of nickel and silicon. Troublesome vanadium and nickel constituents in the ash of these fuels were removed in the slag by introducing into the first reaction zone R₁ or in the first and second reaction zones R₁ and R₂ in admixture with fresh portions of the sulfur-containing fuel feedstock additive A comprising an iron-containing additive when the silicon content of said fuel feedstock is comparatively low, or additive B comprising an iron and calcium-containing additive when the silicon content for said fuel feedstock is comparatively high. For additional information with respect to additives A and B, reference is made to coassigned U.S. Patent Nos. 4,668,428 and 4,668,429, which are incorporated herewith by reference.

Further, one example of this embodiment pertains to a continuous process for the production of desulfurized synthesis gas, fuel gas, or reducing gas comprising:
(1) mixing a first portion of sulfur-containing heavy liquid hydrocarbonaceous fuel and/or sulfur-containing solid carbonaceous fuel whose ashes include a minimum of 5.0 wt. % vanadium, a minimum of 2.0 wt. % of nickel, and silicon with additive A comprising an iron-containing additive when the silicon content of said fuel feedstock is less than about 350 ppm, or additive B comprising an iron and calcium-containing additive when the silicon content of said fuel feedstock is about 400 ppm or more; and reacting said mixture by partial oxidation with a free-oxygen containing gas and in the presence of a temperature moderator in a first free-flow refractory lined reaction zone of a gas generator at an autogeneous temperature in the range of about 1038°C to 1593°C (1900°F to 2900°F) and above the softening temperature of the ash in the first reaction zone, and a pressure in the range of about 0.2 to 25 MPa (2 to 250 atmospheres) to produce a hot stream of synthesis gas, reducing gas, or fuel gas comprising H₂ , CO, CO₂ , H₂S, COS and and at least one gaseous material selected from the group consisting of H₂O, N₂, CH₄, NH₃, A and containing entrained material comprising particulate carbon, unreacted fuel if any, and slag; wherein sufficient additive A or B is introduced into the first reaction zone so as to provide iron atoms when additive A is used or iron and calcium atoms when additive B is used in the amount of about 1.0 to 1.8 times the atoms of sulfur in the first reaction zone plus about 0.3 to 1.2 times the atoms of silicon in the ash in the first reaction zone;
(2) passing at least a portion of the hot gas stream from (1) in admixture with a second portion of said sulfur-containing heavy liquid hydrocarbonaceous fuel and/or sulfur-containing solid carbonaceous fuel and additive A comprising an iron-containing additive when the silicon content of said fuel feedstock is less than 350 ppm, or additive B comprising an iron and calcium-containing additive when the silicon content of said fuel feedstock is about 400 ppm or more through a second unobstructed free-flow refractory lined reaction zone; wherein sufficient additive A or B is introduced into the second reaction zone so as to provide iron atoms when additive A is used or iron and calcium atoms when additive B is used in the amount of about 1.0 to 1.8 times the atoms of sulfur in the second portion of sulfur-containing fuel plus the atoms of sulfur in the sulfur-containing gases in the second reaction zone plus about 0.3 to 1.2 times the atoms of silicon in the ash from said second portion of sulfur-containing fuel, and the mole ratio of H₂O and/or CO₂ to carbon in the second reaction zone is in the range of about 0.7 to 25.0; and the weight ratio of additive A or B to ash in the first and second reaction zones is in the range of about 1.0-10.0 to 1.0, and for each part by weight of vanadium there is at least 10 parts by weight of iron when additive A is used, or at least 10 parts by weight of iron plus calcium when additive B is used;
(3) devolatilizing said second portion of sulfur-containing fuel in said second reaction zone; and reacting in said second reaction zone in the absence of additional free-oxygen containing gas and at a temperature in the range of about 538°C to 1566°C (1000°F-2850°F), (i) H₂O and/or CO₂ with carbon from said second portion of fuel, particulate carbon, and unreacted fuel, if any to produce supplemental H₂ and carbon oxides, entrained molten slag, and (ii) said additive A or B with the sulfur containing gases in the gas streams produced in steps (1) and (2) to produce particulate matter comprising iron oxysulfide and also calcium sulfide with additive B; and where in said second reaction zone when additive A is used said iron-containing additive combines with at least a portion of said nickel constituents and sulfur from the feedstock to produce a liquid phase washing agent that collects and transports at least a portion of the vanadium-containing oxide laths and spinels and other ash components and refractory out of the second reaction zone; and when additive B is used separate portions of said iron-and calcium-containing additive (I) combine with a portion of said nickel, calcium and sulfur to generate a liquid phase washing agent that collects and transports a portion of the vanadium-containing oxide laths and spinels and other ash components and refractory; and (II) combine with a portion of said nickel, calcium and silicon to generate a liquid oxide-silicate phase that fluxes substantially all of the remaining portion of said vanadium-containing oxide laths and spinels and other ash components to produce molten slag; and (4) discharging from said second reaction zone a stream of synthesis gas, reducing gas, or fuel gas and slag; and in comparison with the product gas stream produced without the introduction of said additive A or B in (1) and (2), the gas stream discharged from (4) contains a reduced amount of sulfur-containing gases, and increased amounts of H₂ + carbon oxides, iron oxysulfide and calcium sulfide particulate matter.

In another example of this embodiment, a calcium-containing additive in admixture with a second portion of said sulfur-containing fuel is introduced into the second reaction zone along with H₂ O and/or CO₂, in the manner described previously. In one embodiment, at least a portion of the molten slag in the effluent gas stream from the first reaction zone is removed prior to the second reaction zone.

Further, this example pertains to a continuous process for the production of desulfurized synthesis gas, fuel gas, or reducing gas comprising:
(1) mixing a first portion of sulfur-containing heavy liquid hydrocarbonaceous fuel and/or sulfur-containing solid carbonaceous fuel whose ashes include a minimum of 5.0 wt. % vanadium, a minimum of 2.0 wt. % of nickel, and silicon with additive A comprising an iron-containing additive when the silicon content of said fuel feedstock is less than about 350 ppm, or additive B comprising an iron and calcium-containing additive when the silicon content of said fuel feedstock is about 400 ppm or more; and reacting said mixture by partial oxidation with a free-oxygen containing gas and in the presence of a temperature moderator in a first free-flow refractory lined reaction zone of a gas generator at an autogeneous temperature in the range of about 1038°C to 1593°C (1900°F to 2900°F) and above the softening temperature fo the ash in the first reaction zone, and a pressure in the range of about 0.2 to 25 MPa (2 to 250 atmospheres) to produce a hot stream of synthesis gas, reducing gas, or fuel gas comprising H₂, CO, CO₂, H₂S, COS and at least one gaseous material selected from the group consisting of H₂O, N₂, CH₄, NH₃, A, and containing entrained material comprising particulate carbon, unreacted fuel if any, and slag; wherein sufficient additive A or B is introduced into the first reaction zone so as to provide iron atoms when additive A is used or iron and calcium atoms when additive B is used in the amount of about 1.0 to 1.8 times the atoms of sulfur in the first reaction zone plus about 0.3 to 1.2 times the atoms of silicon in the ash in the second reaction zone; and for each part by weight of vanadium there is at least 10 parts by weight of iron when additive A is used, or at least 10 parts by weight of iron and calcium when additive B is used;
(2) passing at least a portion of the hot gas stream from (1) in admixture with a second portion of said sulfur-containing heavy liquid hydrocarbonaceous fuel and/or sulfur-containing solid carbonaceous fuel and a calcium-containing additive through a second unobstructed free-flow refractory lined reaction zone; wherein sufficient calcium-containing additive is introduced into the second reaction zone so as to provide calcium atoms in the amount of about 1.0 to 1.8 times the atoms of sulfur in the second reaction zone plus about 0.1 to 0.2 times the atoms of silicon in the ash from said second portion of sulfur-containing fuel, and the mole ratio of H₂O and/or CO₂ to carbon in the second reaction zone is in the range of about 0.7 to 25.0; and the weight ratio of calcium-containing additive to ash in the second reaction zone is in the range of about 1.0-10.0 to 1.0;
(3) devolatilizing said second portion of sulfur-containing fuel and reacting in said second reaction zone in the absence of additional free-oxygen containing gas and at a temperature below that in said first reaction zone and below the ash softening temperature (i) H₂O and/or CO₂ with carbon from said second portion of fuel, to produce supplemental H₂ and carbon oxides, and (ii) said calcium-containing additive with the sulfur containing gases in the gas streams produced in steps (1) and (2) to produce particulate matter comprising calcium sulfide and combining in said second reaction zone a portion of said newly formed particulate matter and/or calcium-containing additive with slag and/or ash to produce fly-ash having an increased ash softening temperature; and
(4) discharging from said second reaction zone a stream of synthesis gas, reducing gas, or fuel gas with entrained fly-ash; and in comparison with a gas stream produced without the introduction of said calcium-containing additive in (2), the gas stream discharged from the second reaction zone contains a reduced amount of sulfur-containing gases, and increased amounts of H₂ + carbon oxides and calcium sulfide-containing particulate matter.

The iron-containing additive A in both of said examples of the previous embodiment contains iron compounds selected from the group consisting of oxides, carbonates, carbonyl, nitrates and mixtures thereof. The iron and calcium-containing additive B contains iron and calcium compounds selected from the group consisting of oxides, carbonates, nitrates, and mixtures thereof.

The iron-containing portion of said additive A and B is a ferro or ferri organic compound selected from the group consisting of nephthenates, axalates, acetates, citrates, benzoates, oleates, tartrates, and mixtures thereof. For example the iron-containing portion of additive A or B is iron oxide; and in additive B said iron oxide is in admixture with calcium oxide. Included in the additive A or B may be an additional material compound selected from the group of elements consisting of magnesium chromium and mixtures thereof in the total amount of about 1.0 to 10.0 wt. % of said iron-containing additive. Iron-containing additive A comprises about 30.0 to 100.0 wt. % of an iron compound. The iron and calcium-containing additive B comprises about 30.0 to 90.0 wt. % of an iron compound, preferably iron oxide, and the remainder may substantially comprise a calcium compound preferably calcium oxide. The sulfur-containing heavy liquid hydrocarbonaceous fuel having a nickel and vanadium-containing ash feedstock is selected from the group consisting of crude residue from petroleum distillate, reduced crude, whole crude, asphalt, coal tar, coal derived oil, shale oil, tar sand oil, and mixtures thereof. In one embodiment the sulfur-containing solid carbonaceous fuel having a nickel and vanadium-containing ash is petroleum coke. Substantially all of the sulfur in said feedstock is converted into the sulfides of iron and nickel with additive A and iron, nickel and calcium with additive B and leaves the first reaction zone in the slag. The mixture of additive A or B and feedstock from (1) has a particle size of ASTM E-11 Standard Sieve Designation in the range of about 210 microns to 37 microns, or below. The previously described liquid phase washing agent substantially comprises in wt. %: iron sulfide about 75 to 95 , nickel sulfide about 0.5 to 3.0, and iron oxide about 2 to 9.

The first and second reaction zones may be two free-flow unobstructed vertical cylindrical shaped chambers with the products of reaction passing downwardly or upwardly through the first reaction zone and then downwardly or upwardly through the second reaction zone. For example the first and second reaction zones are two down-flowing coaxial refractory lined free-flow chambers located in the same pressure vessel. Alternatively, the first and second reaction zones are two up-flowing coaxial chambers located in the same pressure vessel. In one embodiment such as accomplished with the apparatus shown in coassigned U. S. Patent 4,328,006 which is incorporated herein by reference, prior to the second reaction zone 4 or 46 at least a portion of the molten slag entrained in the hot effluent gas stream from the first reaction zone is separated from the hot gas stream.

Other modifications and variations of the invention as hereinbefore set forth may be made without departing from the scope thereof, and therefore only such limitations should be imposed on the invention as are indicated in the appended claims.

## Claims

1. In a continuous process for the production of desulfurized synthesis gas, fuel gas, or reducing gas comprising:
(1) reacting sulfur-containing heavy liquid hydrocarbonaceous fuel and/or sulfur-containing solid carbonaceous fuel by partial oxidation with a free-oxygen containing gas in a free-flow refractory lined, first reaction zone of a gas generator at an autogenous temperature in the range of about 1038°C to 1593°C (1900°F to 2900°F), and a pressure in the range of about 0.2 to 25 MPa (2 to 250 atmospheres) to produce a hot stream of synthesis gas, reducing gas, or fuel gas comprising H₂, CO, CO₂, H₂S, COS and at least one gaseous material selected from the group consisting of H₂O, N₂, CH₄, NH₃, A, and containing entrained material comprising particulate carbon, and slag;
the use of an iron-containing and/or calcium-containing additive as a reactant in admixture with at least a portion of the hot gas stream from (1) with or without a second portion of said sulfur containing fuel in the unobstructed central passage of a second reaction zone, to react in said second reaction zone at a temperature below that of said first reaction zone, in addition to the reaction of H₂O and/or CO₂ with carbon to produce supplemental H₂ and carbon oxide, with the sulfur containing gases in said gas stream to produce particulate matter comprising iron oxysulfide and/or calcium sulfide, a portion of said newly formed particulate matter and/or said iron-containing and/or calcium-containing additive, being combined with molten slag and/or ash, to produce slag having a reduced ash fusion temperature and viscosity or fly-ash having an increased ash softening temperature; and a partially cooled stream of synthesis gas, reducing gas or fuel gas containing a reduced amount of sulfur-containing gases being discharged from said second reaction zone.

2. A continuous process for the production of desulfurized synthesis gas, fuel gas, or reducing gas comprising:
(1) reacting sulfur-containing heavy liquid hydrocarbonaceous fuel and/or sulfur-containing solid carbonaceous fuel by partial oxidation with a free-oxygen containing gas in a free-flow refractory lined, first reaction zone of a gas generator at an autogenous temperature in the range of about 1038°C to 1593°C (1900°F to 2900°F), and a pressure in the range of about 0.2 to 25 MPa (2 to 250 atomospheres) to produce a hot stream of synthesis gas, reducing gas, or fuel gas comprising H₂, CO, CO₂ H₂S, COS and at least one gaseous material selected from the group consisting of H₂O, N₂, CH₄, NH₃, A, and containing entrained material comprising particulate carbon, and slag;
(2) passing at least a portion of the hot gas stream from (1) in admixture with an iron-containing and/or calcium-containing additive with or without a second portion of said sulphur containing fuel through an unobstructed central passage of a second reaction zone;
(3) reacting in said second reaction zone at a temperature below that of said first reaction zone (i) H₂O and/or CO₂ with carbon to produce supplemental H₂ + carbon oxides; and (ii) said iron-containing and/or calcium-containing additive with the sulphur containing gases in said gas stream to produce particulate matter comprising iron oxysulfide and/or calcium sulfide; and combining in said second reaction zone a portion of said newly formed particulate matter and/or said iron-containing and/or calcium-containing additive, with molten slag and/or ash, to produce slag having a reduced ash fusion temperature and viscosity or fly-ash having an increased ash softening temperature; and
(4) discharging from said second reaction zone a partially cooled stream of synthesis gas, reducing gas or fuel gas containing a reduced amount of sulfur-containing gases.

3. A process according to Claim 2 wherein, in step (1), a temperature moderator is present in said first reaction zone and the temperature therein is above the ash-fusion temperature of the slag formed in the reaction zone, and wherein steps (2) - (4) comprise:-
(2) passing at least a portion of the hot gas stream from (1) in admixture with an iron-containing additive through an unobstructed central passage of a radiant cooler; where in said radiant cooler the weight ratio of iron-containing additive to sulfur plus the ash in the fuel feed is in the range of about 0.5 - 10.0 to 1.0 and wherein said iron-containing additive is introduced into the hot gas stream from (1) at the entrance to and/or at one or more locations within the radiant cooler;
(3) reacting in said radiant cooler said iron-containing additive with the sulfur containing gases in said gas stream to produce particulate matter comprising iron oxysulfide, and combining in said radiant cooler zone a portion of said newly formed particulate matter and/or iron-containing additive with molten slag and/or ash to produce slag having a reduced ash fusion temperature and viscosity; while simultaneously reducing the temperature of said gas stream from an entering temperature in the range of about 1038°C to 1593°C (1900°F to 2800°F), to a discharge temperature in the range of about 538°C to 871°C (1000°F to 1600°F) by indirect heat exchange with a coolant; and
(4) discharging from said radiant cooler a partially cooled stream of synthesis gas, reducing gas, or fuel gas and slag; and in comparison with a gas stream produced without the introduction of said iron-containing additive in (2), said partially cooled gas stream contains a reduced amount of sulfur-containing gases, and increased amounts of H₂ + carbon oxides and iron oxysulfide particulate matter.

4. A process according to Claim 2 wherein, in step (1), a first portion of the sulfur-containing heavy liquid hydrocarbonaceous fuel and/or sulfur-containing solid carbonaceous fuel is reacted as aforesaid in said first reaction zone, and wherein steps (2) - (4) comprise:
(2) passing at least a portion of the hot gas stream from (1) in admixture with a second portion of said fuel and an iron-containing additive through a second unobstructed free-flow refractory lined reaction zone wherein sufficient iron-containing additive is introduced into the second reaction zone so as to provide iron atoms in the amount of about 1.1 to 1.8 times the atoms of sulfur in the second reaction zone plus about 0.3 to 1.2 times the atoms of silicon in the ash in the second reaction zone, and the mole ratio of H₂O and/or CO₂ to carbon in the second reaction zone is in the range of about 0.7 to 25;
(3) devolatilizing said second portion of sulfur-containing fuel and reacting in said second reaction zone at a temperature below that in said first reaction zone and in the absence of additional free-oxygen containing gas, (i) H₂O and/or CO₂ with carbon from said second portion of fuel with particulate carbon and any unreacted portion of said first portion of fuel, to produce supplemental H₂ and carbon oxides, and (ii) said iron-containing additive with the sulfur containing gases in the gas streams produced in steps (1) and (2) to produce the particulate matter comprising iron oxysulfides; and combining in said second reaction zone a portion of said newly formed particulate matter and/or iron-containing additive with slag and/or ash to produce slag having a reduced ash softening temperature and a reduced viscosity; and
(4) discharging from said second reaction zone a stream of synthesis gas, reducing gas or fuel gas and slag; and in comparison with a gas stream produced without the introduction of said iron-containing additive in (2), the gas stream discharged from the second reaction zone contains a reduced amount of sulfur-containing gases, and increased amounts of H₂ + carbon oxides and iron oxysulfide particulate matter.

5. A process according to Claim 2, wherein, in step (1), a first portion of said sulfur-containing heavy liquid hydrocarbonaceous fuel and/or sulfur-containing solid carbonaceous fuel containing about 0.2 to 8.0 wt. % sulfur is reacted as aforesaid in said first reaction zone with controlled amounts of free-oxygen containing gas and temperature moderator so that an equilibrium oxygen concentration with a partial pressure which is less than about 1.01 x 10⁻¹³ MPa (10⁻¹² atmospheres) is provided in the gas phase in said first reaction zone and in a downstream second reaction zone; and in said first reaction zone the 0/C atomic ratio is in the range of about 0.3 to 1.1,
the weight ratio of water to solid carbonaceous fuel plus liquid hydrocarbonaceous material, if any, is in the range of about 0.3 to 0.70, and about 70 to 98 wt. % of the carbon in said sulfur-containing fuel is converted into carbon oxides, thereby producing a hot gas stream including a raw product gas mixture comprising H₂, CO, CO₂, H₂S, COS, at least one gas selected from the group consisting of H₂O, N₂, CH₄, and A, and entrained material comprising particulate carbon, unreacted fuel if any, and molten slag; and the temperature is above the softening temperature of the ash in the fuel, and at least 90 wt. % of the sulfur in the fuel in the first reaction zone is converted into sulfur-containing gas; and wherein steps (2) - (4) comprise:
(2) passing at least a portion of the hot gas stream from (1) in admixture with a second portion of said sulfur-containing fuel and a calcium-containing additive through a second unobstructed free-flow refractory lined reaction zone, wherein sufficient calcium-containing additive is introduced into the second reaction zone so as to provide calcium atoms in the amount of about 0.95 to 1.8 times the atoms of sulfur in the second reaction zone plus about 0.1 to 0.2 times the atoms of silicon in the ash in the second reaction zone, and the mole ratio of H₂O and/or CO₂ to carbon in the second reaction zone is in the range of about 0.7 to 25;
(3) devolatilizing said second portion of sulfur-containing fuel and reacting in said second reaction zone in the absence of additional free-oxygen containing gas at a temperature below that in said first reaction zone and below the ash softening temperature, (i) H₂O and/or CO₂ with carbon from said second portion of fuel and carbon from the unreacted portion of said first portion of fuel, if any, to produce supplemental H₂ and carbon oxides, and (ii) said calcium-containing additive with the sulfur containing gases in the gas streams produced in steps (1) and (2) to produce particulate matter comprising calcium sulfide and combining in said second reaction zone a portion of said newly formed particulate matter and/or calcium-containing additive with slag and/or ash to produce fly-ash having an increased ash softening temperature; and
(4) discharging from said second reaction zone a stream of synthesis gas, reducing gas, or fuel gas with entrained fly-ash and in comparison with a gas stream produced without the introduction of said calcium-containing additive in (2), the gas stream discharged from the second reaction zone contains a reduced amount of sulfur-containing gases, and increased amounts of H₂ + carbon oxides and calcium sulfide-containing particulate matter.

6. A process according to any one of claims 2,4 and 5, wherein said iron-containing or calcium-containing additive is introduced into the hot gas stream from (1) at the entrance to and/or at one or more locations within the second reaction zone.

7. A process according to any one of claims 2-6, provided with the step of contacting the hot gas stream passing through the central passage of said radiant cooler or said second reaction zone with an atomized spray of said iron-containing or calcium-containing additive.

8. A process according to any one of claims 2-6, wherein the dwell times in the partial oxidation gas generator or the first reaction zone and the radiant cooler or the second reaction zones in (1) and (2) are respectively in the ranges of about 0.5 - 10 seconds and about 5 to 50 seconds.

9. A process according to any one of claims 2-8, wherein at least a portion of the entrained material and slag in the hot gas stream leaving the gas generator in (1) are removed respectively by gas-solids separation means and gravity prior to introducing the hot gas stream into the radiant cooler or the second reaction zone in (2).

10. A process according to claim 3 provided with the step of separating iron oxysulfide and particulate carbon from the cooled effluent gas stream leaving the radiant cooler and recycling 0 to 100 wt. % of sad material to the reaction zone of the partial oxidation gas generator.

11. A process according to claim 4 or claim 5 provided with the step of cooling the hot gas stream from (4) by indirect heat exchange thereby producing by-product steam.

12. A process according to claim 4 provided with the step of separating iron oxysulfide and particulate carbon from the cooled effluent gas stream and recycling about 0 to 100 wt. % of said material to the reaction zone of the partial oxidation gas generator.

13. A process according to any of claims 2 - 12 provided with the steps of separating particulate matter comprising iron oxysulfide or calcium sulfide and particulate carbon from the partially cooled gas stream from (4) in a gas-solids separation zone, roasting said particulate matter thereby substantially producing iron oxide or calcium oxide and sulfur-containing gas, and separating said iron oxide or calcium oxide from said sulfur-containing gas.

14. A process according to claim 13 provided with the step of introducting a portion of said iron oxide or calcium oxide in admixture with make-up iron-containing or calcium-containing additive entrained in a carrier into the radiant cooler or the second reaction zone in (2), where said materials are mixed with said hot gas stream from (1).

15. A process according to claim 13 or claim 14 provided with the step of introducing a portion of said iron oxide or calcium oxide into said partial oxidation reaction zone in (1) in admixture with said heavy liquid hydrocarbonaceous and/or solid carbonaceous fuel.

16. A process according to any one of claims 13 - 15 comprising classifying said particulate matter prior to said roasting step and separating out materials having a particle size greater than about 100 microns and mixing said materials having a particle size greater than about 100 microns with the sulfur-containing heavy liquid hydrocarbonaceous fuel feed and/or sulfur containing solid carbonaceous fuel feed in step (1), and introducing at least a portion of said mixture into the reaction zone of the partial oxidation gas generator.

17. A process according to claim 5 where in (2) said second portion of sulfur-containing fuel comprises a pumpable slurry of solid carbonaceous fuel and calcium-containing material having a solids content of about 50 - 70 wt. % in a liquid carrier selected from the group consisting of H₂O and CO₂; and provided with the step of skimming said liquid carrier prior to said mixture entering the second reaction zone to reduce the amount of H₂O entering the second reaction zone to about 5 to 10 wt. % (basis weight of feed), or alternatively to reduce the amount of CO₂ entering the second reaction zone to about 10 to 30 wt. % (basis weight of feed).

18. A process according to claim 5 provided with the steps of cooling and cleaning the hot raw product gas mixture in (2) by contacting said hot raw product gas mixture with a liquid hydrocarbonaceous fuel cooling and scrubbing agent thereby producing a slurry comprising fly-ash and calcium sulfide in liquid hydrocarbonaceous fuel.

19. A process according to claim 18 provided with the steps of steam stripping said slurry comprising fly-ash and calcium sulfide in liquid hydrocarbonaceous fuel and separating H₂S, and recycling the sulfur-depleted calcium-containing slurry to the second reaction zone.

20. A process according to claim 3 or claim 4, wherein a matallic oxide from the group consisting of copper oxide, zinc oxide, calcium oxide and mixtures thereof is introduced into the radiant cooler or the second reaction zone in (2) in admixture with said iron-containing additive and said second portion of fuel.

21. A process according to claim 4 or claim 5, wherein an alkali metal and/or alkaline earth metal compound is introduced into the second reaction zone in (2) in admixture with said iron-containing or calcium-containing additive and said second portion of fuel.

22. A process according to Claim 21, wherein said alkali metal and/or alkaline earth metal constituents are selected from the metals in the Periodic Table of Elements in Groups IA and/or IIA.

23. A process according to Claim 21, wherein, in step (1), a first portion of sulfur-containing heavy liquid hydrocarbonaceous fuel and/or sulfur-containing solid carbonaceous fuel whose ashes include a minimum of 5.0 wt. % vanadium, a minimum of 2.0 wt. % of nickel, and silicon is mixed with additive A comprising an iron-containing additive when the silicon content of said fuel feedstock is less than 350 ppm, or additive B comprising an iron and calcium-containing additive when the silicon content of said fuel feedstock is about 400 ppm or more; and said mixture is reacted as aforesaid and in the presence of a temperature moderator in said first reaction zone at a temperature above the softening temperature of the ash in the first reaction Zone; sufficient additive A or B being introduced into the first reaction zone so as to provide iron atoms when additive A is used or iron and calcium atoms when additive B is used in the amount of about 1.0 to 1.8 times the atoms of sulfur in the first reaction zone plus about 0.3 to 1.2 times the atoms of silicon in the ash in the first reaction zone; and wherein steps (2) - (4) comprise:-
(2) passing at least a portion of the hot gas stream from (1) in admixture with a second portion of said sulfur-containing heavy liquid hydrocarbonaceous fuel and/or sulfur-containing solid carbonaceous fuel and additive A comprising an iron-containing additive when the silicon content of said fuel feedstock is less than 350 ppm, or additive B comprising an iron- and calcium-containing additive when the silicon content of said fuel feedstock is about 400 ppm or more through a second unobstructed free-flow refractory lined reaction zone; wherein sufficient additive A or B is introduced into the second reaction zone so as to provide iron atoms when additive A is used or iron and calcium atoms when additive B is used in the amount of about 1.0 to 1.8 times the atoms of sulfur in the second portion of sulfur-containing fuel plus the atoms of sulfur in the sulfur-containing gases in the second reaction zone plus about 0.3 to 1.2 times the atoms of silicon in the ash from said second portion of sulfur-containing fuel, and the mole ratio of H₂O and/or CO₂ to carbon in the second reaction zone is in the range of about 0.7 to 25.0; and the weight ratio of additive A or B to ash in the first and second reaction zones is in the range of about 1.0 - 10.0 to 1.0, and for each part by weight of vanadium there is at least 10 parts by weight of iron when additive A is used, or at least 10 parts by weight of iron plus calcium when additive B is used;
(3) devolatilizing said second portion of sulfur-containing fuel in said second reaction zone; and reacting in said second reaction zone in the absence of additional free-oxygen containing gas and at a temperature in the range of about 1000°F - 2850°F, (i) H₂O and/or CO₂ with carbon from said second portion of fuel, particulate carbon and unreacted fuel, if any, to produce supplemental H₂ and carbon oxides, entrained molten slag, and (ii) said additive A or B with the sulfur containing gases in the gas streams produced in steps (1) and (2) to produce particulate matter comprising iron oxysulfide and also calcium sulfide with additive B; and where in said second reaction zone when additive A is used said iron-containing additive combines with at least a portion of said nickel constituents and sulfur from the feed-stock to produce a liquid phase washing agent that collects and transports at least a portion of the vanadium-containing oxide laths and spinels and other ash components and refractory out of the second reaction zone; and when additive B is used separate portions of said iron and calcium-containing additive (I) combine with a portion of said nickel, calcium and sulfur to generate a liquid phase washing agent that collects and transports a portion of the vanadium-containing oxide laths and spinels and other ash components and refractory; and (II) combine with a portion of said nickel, calcium and silicon to generate a liquid oxide-silicate phase that fluxes substantially all of the remaining portion of said vanadium-containing oxide laths and spinels and other ash components to produce molten slag; and
(4) discharging from said second reaction zone a stream of synthesis gas, reducing gas, or fuel gas and slag; and in comparison with the product gas stream produced without the introduction of said additive A or B in (1) and (2), the gas stream discharged from (4) contains a reduced amount of sulfur-containing gases, and increased amounts of H₂ + carbon oxides and iron oxysulfide and calcium sulfide particulate matter.

24. A process according to Claim 23, wherein, in step (1), sufficient additive A or B is introduced into the first reaction zone so as to provide iron atoms when additive A is used or iron and calcium atoms when additive B is used in the amount of about 1.0 to 1.8 times the atoms of sulfur in the first reaction zone plus about 0.3 to 1.2 times the atoms of silicon in the ash in the second reaction zone; and for each part by weight of vanadium there is at least 10 parts by weight of iron when additive A is used, or at least 10 parts by weight of iron and calcium when additive B is used; and wherein steps (2) - (4) comprise:-
(2) passing at least a portion of the hot gas stream from (1) in admixture with a second portion of said sulfur-containing heavy liquid hydrocarbonaceous fuel and/or sulfur-containing solid carbonaceous fuel and a calcium-containing additive through a second unobstructed free-flow refractory lined reaction zone; wherein sufficient calcium-containing additive is introduced into the second reaction zone so as to provide calcium atoms in the amount of about 0.95 to 1.8 times the atoms of sulfur in the second reaction zone plus about 0.1 to 0.2 times the atoms of silicon in the ash from said second portion of sulfur-containing fuel, and the mole ratio of H₂O and/or CO₂ to carbon in the second reaction zone is in the range of about 0.7 to 25.0; and the weight ratio of calcium-containing additive to ash in the second reaction zone is in the range of about 1.0 - 10.0 to 1.0;
(3) devolatilizing said second portion of sulfur-containing fuel and reacting in said second reaction zone in the absence of additional free-oxygen containing gas; and at a temperature below that in said first reaction zone and below the ash softening temperature, (i) H₂O and/or CO₂ with carbon from said second portion of fuel, to produce supplemental H₂ and carbon oxides, and (ii) said calcium-containing additive with the sulfur containing gases in the gas streams produced in steps (1) and (2) to produce particulate matter comprising calcium sulfide and combining in said second reaction zone a portion of said newly formed particulate matter and/or calcium-containing additive with slag and/or ash to produce fly-ash having a reduced ash softening temperature; and
(4) discharging from said second reaction zone a stream of synthesis gas, reducing gas, or fuel gas with entrained fly-ash; and in comparison with a gas stream produced without the introduction of said calcium-containing additive in (2), the gas stream discharged from the second reaction zone contains a reduced amount of sulfur-containing gases, and increased amounts of H₂ + carbon oxides and calcium sulfide-containing particulate matter.

25. A process according to claim 23 or claim 24, wherein said iron and calcium-containing additive B comprises about 30.0 to 90.0 wt. % of an iron compound, and the remainder substantially comprises a calcium compound.

26. A process according to any one of claims 23 - 25, where included in the additive A or B in (1) is an additional material compound selected from the group of elements consisting of magnesium, chromium and mixtures thereof.

27. A process according to claim 23, wherein said liquid phase washing agent substantially comprises in wt. %; iron sulfide about 75 to 95, nickel sulfide about 0.5 to 3.0, and iron oxide about 2 to 9.

28. A process according to any one of claims 23 - 27, provided with the step of separating at least a portion of the slag entrained in the hot effluent gas stream from the first reaction zone, prior to the second reaction zone.

## Patentansprüche

1. In einem kontinuierlichen Verfahren zur Erzeugung eines entschwefelten synthetischen Gases, Brenngases oder Reduktionsgases, mit:
(1) Reagierenlassen eines Schwefel enthaltenden, schweren kohlenwasserstoffhaltigen Brennstoffs und/oder eines Schwefel enthaltenden festen kohlenstoffhaltigen Kraftstoffs durch Partialoxidation mit einem freien Sauerstoff enthaltenden Gas in einer feuerfest ausgekleideten, ersten Freistrom-Reaktionszone eines Gasgenerators bei einer autogenen Temperatur im Bereich von ungefähr 1038°C bis 1593°C (1900°F bis 2900°F) und einem Druck im Bereich von ungefähr 0,2 bis 25 MPa (2 bis 250 Atmosphären) zur Erzeugung eines heißen Stroms des synthetischen Gases, Reduktionsgases oder Brenngases, das aus H₂, CO, CO₂, H₂S, COS und wenigstens einem gasförmigen Stoff, der aus der Gruppe, die aus H₂O, N₂, CH₄, NH₃, A ausgewählt ist, besteht und mitgeführte Stoffe, die insbesondere Kohlenstoff und Schlacke aufweisen, beinhaltet;
die Verwendung von einem Eisen und/oder Kalzium beinhaltenden Zuschlagsstoffs als ein Reaktionsmittel in Mischung mit wenigstens einem Teil des heißen Gasstromes aus (1) mit oder ohne einem zweiten Anteil des Schwefel enthaltenden Brennstoffes in einer unbehinderten, zentralen Passage einer zweiten Reaktionszone, um in der zweiten Reaktionszone bei einer Temperatur unterhalb derjenigen der ersten Reaktionszone zusätzlich zu der Reaktion von H₂O und/oder CO₂ mit Kohlenstoff zur Erzeugung von zusätzlichem H₂ und Kohlenstoffoxid mit den Schwefel enthaltenden Gasen in dem Gasstrom zu reagieren zur Erzeugung von Partikeln, die Eisenoxysulfid und/oder Kalziumsulfid, einen Anteil der neugebildeten Partikel und/oder des Eisen enthaltenden und/oder Kalzium enthaltenden Zuschlagsstoffs aufweisen, kombiniert mit geschmolzener Schlacke und/oder Asche, zur Erzeugung einer Schlacke mit einer verringerten Aschenschmelztemperatur und Viskosität oder einer Flugasche mit einer erhöhten Aschenerweichungstemperatur, und einem teilweise abgekühlten Strom des synthetischen Gases, Reduktionsgases oder Brenngases, das eine verringerte Menge an Schwefel enthaltenden Gasen aufweist, die aus der zweiten Reaktionszone abgeführt werden.

2. Kontinuierliches Verfahren für die Herstellung von entschwefeltem synthetischen Gas, Brenngas oder Reduktionsgas, mit
(1) Reagierenlassen eines Schwefel enthaltenden, schweren kohlenwasserstoffhaltigen Brennstoffs und/oder eines Schwefel enthaltenden festen kohlenstoffhaltigen Kraftstoffs durch Partialoxidation mit einem freien Sauerstoff enthaltenden Gas in einer feuerfest ausgekleideten, ersten Freistrom-Reaktionszone eines Gasgenerators bei einer autogenen Temperatur im Bereich von ungefähr 1038°C bis 1593°C (1900°F bis 2900°F) und einem Druck im Bereich von ungefähr 0,2 bis 25 MPa (2 bis 250 Atmosphären) zur Erzeugung eines heißen Stroms des synthetischen Gases, Reduktionsgases oder Brenngases, das aus H₂, CO, CO₂, H₂S, COS und wenigstens einem gasförmigen Stoff, der aus der Gruppe, die aus H₂O, N₂, CH₄, NH₃, A ausgewählt ist, besteht und mitgeführte Stoffe, die insbesondere Kohlenstoff aufweisen und Schlacke beinhaltet;
(2) Führen wenigstens eines Teiles des heißen Gasstromes von (1) in einer Mischung mit einem Eisen enthaltenden und/oder Kalzium enthaltenden Zuschlagsstoff mit oder ohne einem zweiten Anteil des Schwefel enthaltenden Brennstoffes durch eine nicht behinderte, zentrale Passage einer zweiten Reaktionszone;
(3) Reagierenlassen in der zweiten Reaktionszone bei einer Temperatur unterhalb der Temperatur der ersten Reaktionszone von (i) H₂O und/oder CO₂ mit Kohlenstoff zur Erzeugung von zusätzlichem H₂ + Kohlenstoffoxiden; und von (ii) des eisenhaltigen und/oder kalziumhaltigen Zuschlagsstoffs mit den Schwefel enthaltenden Gasen in dem Gasstrom zur Erzeugung von Partikeln, die Eisenoxysulfid und/oder Kalziumsulfid enthalten; und Kombinieren eines Teiles des neu gebildeten körnigen Materials und/oder des Eisen enthaltenden und/oder Kalzium enthaltenden Zuschlagsstoffes in der zweiten Reaktionszone mit geschmolzener Schlacke und/oder Asche zur Erzeugung von Schlacke mit einer verringerten Aschenschmelztemperatur und Viskosität oder Flugasche mit einer erhöhten Aschenerweichungstemperatur; und
(4) Abführen eines teilweise abgekühlten Stromes des synthetischen Gases, des Reaktionsgases oder des Brenngases, das eine reduzierte Menge Schwefel enthaltenden Gases beinhaltet, aus der zweiten Reaktionszone.

3. Verfahren nach Anspruch 2, wobei in dem Schritt (1) in der ersten Reaktionszone ein Temperaturmoderator vorhanden ist und die Temperatur in dieser oberhalb der Aschenschmelztemperatur der in der Reaktionszone gebildeten Schlacke ist, und wobei die Schritte (2) - (4) aufweisen:
(2) Führen wenigstens eines Teiles des heißen Gasstromes von (1) in Mischung mit einem Eisen enthaltenden Zuschlagsstoff durch eine ungehinderte zentrale Passage eines Strahlungskühlers, wobei in dem Strahlungskühler das Gewichtsverhältnis des Eisen enthaltenden Zuschlagsstoffes zu Schwefel zuzüglich der Asche in der Brennstoffzufuhr in dem Bereich von ungefähr 0,5 - 10,0 zu 1,0 ist und wobei der Eisen enthaltende Zuschlagsstoff in den heißen Gasstrom von (1) an dem Eingang zu und/oder an einem oder mehreren Orten innerhalb des Strahlungskühlers eingeführt wird;
(3) Reagierenlassen des Eisen enthaltenden Zuschlagsstoffs mit dem Schwefel enthaltenden Gas in dem Gasstrom in dem Strahlungskühler zur Erzeugung von Partikeln, die Eisenoxysulfid aufweisen, und Kombinieren eines Teiles des neu gebildeten körnigen Materials und/oder des Eisen enthaltenden Zuschlagsstoffs mit der geschmolzenen Schlacke und/oder der Asche in dem Strahlungskühler zur Erzeugung von Schlacke mit einer verringerten Aschenschmelztemperatur und Viskosität, wobei die Temperatur des Gasstromes von einer Eingabetemperatur in dem Bereich von ungefähr 1038°C bis 1593°C (1900°F bis 2800°F) auf eine Abgabetemperatur in dem Bereich von 538°C bis 871°C (1000°F bis 1600°F) gleichzeitig durch indirekten Austausch mit einem Kühlmittel abgekühlt wird; und
(4) Abführen eines teilweise abgekühlten Stromes des synthetischen Gases, des Reduktionsgases oder des Brenngases und der Schlacke aus dem Strahlungskühler, wobei der teilweise gekühlte Gasstrom im Vergleich mit einem Gasstrom, der ohne Zufuhr des Eisen enthaltenden Zuschlagsstoffes im Schritt (2) erzeugt wird, eine verringerte Menge an Schwefel enthaltenden Gasen und eine vergrößerte Menge an H₂ + Kohlenstoffoxid- und Eisenoxysulfidpartikel aufweist.

4. Verfahren nach Anspruch 2, wobei in dem Schritt (1) ein erster Teil des Schwefel enthaltenden schweren, flüssigen Kohlenwasserstoff enthaltenden Brennstoffs in der vorerwähnten ersten Reaktionszone reagiert, und wobei die Schritte (2) - (4) aufweisen:
(2) Führen wenigstens eines Teiles des heißen Gasstromes von (1) in Mischung mit einem zweiten Teil des Brennstoffs und einem Eisen enthaltenden Zuschlagsstoff durch eine zweite, nicht behinderte, feuerfest ausgekleidete Freistrom-Reaktionszone, wobei ausreichend Eisen aufweisender Zuschlagstoff in die zweite Reaktionszone eingeführt wird, so daß Eisenatome in der Menge des ungefähr 1,1 bis 1,8-fachen der Schwefelatome in der zweiten Reaktionszone zuzüglich dem 0,3 bis 1,2-fachen der Siliziumatome in der Asche der zweiten Reaktionszone vorliegen und das Molverhältnis von H₂O und/oder CO₂ zu Kohlenstoff in der zweiten Reaktionszone in dem Bereich von ungefähr 0,7 bis 25 liegt;
(3) Verdunsten des zweiten Teiles des Schwefel enthaltenden Brennstoffs und Reagierenlassen in der zweiten Reaktionszone bei einer Temperatur unterhalb derjenigen der ersten Reaktionszone und in der Abwesenheit von zusätzlichem freien Sauerstoff enthaltenen Gas von (i) H₂O und/oder CO₂ mit Kohlenstoff aus dem ersten Teil des Brennstoffs mit Partikeln und einem nicht gebundenen Teil des ersten Teiles des Brennstoffs zur Erzeugung von zusätzlichem H₂ und Kohlenstoffoxiden, und von (ii) dem Eisen enthaltenden Zuschlagsstoff mit den Schwefel enthaltenden Gasen in den Gasströmen, die in den Schritten (1) und (2) erzeugt worden sind, zur Erzeugung der Eisenoxysulfid enthaltenden Partikel, und Kombinieren eines Teiles der in der zweiten Reaktionszone neu gebildeten Partikel und/oder des Eisen enthaltenden Zuschlagsstoffs mit Schlacke und/oder Asche zur Erzeugung von Schlacke mit einer verringerten Aschenerweichungstemperatur und einer verringerten Viskosität; und
(4) Abführen eines Stromes des synthetischen Gases, des Reduktionsgases oder des Brenngases und der Schlacke aus der zweiten Reaktionszone, wobei der Gasstrom, der aus der zweiten Reaktionszone abgeführt wird, gegenüber dem Gasstrom, der ohne Zufuhr des Eisenenthaltenden Zuschlagsstoffs in (2) erzeugt wird, eine reduzierte Menge an Schwefel enthaltenden Gasen und eine erhöhte Menge an H₂ + Kohlenstoffoxid- und Eisenoxidsulfidpartikel beinhaltet.

5. Verfahren nach Anspruch 2, wobei in dem Schritt (1) ein erster Teil des Schwefel enthaltenden schweren flüssigen kohlenwasserstoffhaltigen Brennstoffs und/oder Schwefel enthaltenden festen, kohlenstoffhaltigen Brennstoffs ungefähr 0,2 bis 8,0 Gew.-% Schwefel enthält, wie oben erwähnt in der ersten Reaktionszone mit kontrollierten Mengen von freien Sauerstoff enthaltendem Gas und einem Temperaturmoderator reagiert, so daß eine Gleichgewichts-Sauerstoffkonzentration mit einem Partialdruck, der kleiner als ungefähr 1,01 * 10⁻¹³ MPa (10⁻¹² Atmosphären) in der Gasphase in der ersten Reaktionszone und in einer abwärtsgerichteten zweiten Reaktionszone geschaffen wird, und das O/C-Atomverhältnis in der ersten Reaktionszone in dem Bereich von ungefähr 0,3 bis 1,1 ist,
das Gewichtsverhältnis von Wasser zu festem kohlenstoffhaltigen Brennstoff zuzüglich flüssigem kohlenwasserstoffhaltigem Material, soweit vorhanden, in dem Bereich von ungefähr 0,3 bis 0,70 ist und ungefähr 70 bis 98 Gew.-% des Kohlenstoffs in dem Schwefel enthaltenden Brennstoff in Kohlenstoffoxid umgewandelt wird, wodurch ein heißer Gasstrom erzeugt wird, der als Rohprodukt eine Gasmischung bestehend aus H₂, CO, CO₂, H₂S, COS, wenigstens einem Gas, das aus der Gruppe H₂O, N₂, CH₄ und A besteht und einem mitgeführten Material, das Kohlenstoffpartikel beinhaltet, ggf. nicht verbundenen Sauerstoff und geschmolzene Schlacke aufweist, und die Temperatur oberhalb der Erweichungstemperatur der Asche in dem Brennstoff ist und wenigstens 90 Gew.-% des Schwefels in dem Brennstoff in der ersten Reaktionszone in Schwefel enthaltendes Gas gewandelt wird, und wobei die Schritte (2) - (4) aufweisen:
(2) Führen wenigstens eines Teiles des heißen Gasstromes von (1) in Mischung mit einem zweiten Teil des Brennstoffs und einem Kalzium enthaltenden Zuschlagstoff durch eine zweite nicht behinderte, feuerfest ausgekleidete Freistrom-Reaktionszone, wobei ausreichend Kalzium aufweisender Zuschlagstoff in die zweite Reaktionszone eingeführt wird, so daß Kalziumatome vorliegen in der Menge des ungefähr 0,95-fachen bis 1,8-fachen der Schwefelatome in der zweiten Reaktionszone zuzüglich dem 0,1 bis 0,2-fachen der Siliziumatome in der Asche der zweiten Reaktionszone und das Molverhältnis von H₂O und/oder CO₂ zu Kohlenstoff in der zweiten Reaktionszone in dem Bereich von ungefähr 0,7 bis 25 liegt;
(3) Verdunsten des zweiten Teiles des Schwefel enthaltenden Brennstoffs und Reagierenlassen in der zweiten Reaktionszone bei einer Temperatur unterhalb derjenigen der ersten Reaktionszone und in der Abwesenheit von zusätzlichem freien Sauerstoff enthaltenen Gas, von (i) H₂O und/oder CO₂ mit Kohlenstoff aus dem ersten Teil des Brennstoffs und Kohlenstoff aus dem nicht reagierten Teil des ersten Teiles des Brennstoffs zur Erzeugung von zusätzlichem H₂ und Kohlenstoffoxiden, und von (ii) dem Kalzium enthaltenden Zuschlagsstoff mit den Schwefel enthaltenden Gasen in den Gasströmen, die in den Schritten (1) und (2) erzeugt worden sind, zur Erzeugung der Partikel, das Kalziumoxysulfid enthält, und Kombinieren eines Teiles der in der zweiten Reaktionszone neu gebildeten Partikel und/oder des Kalzium enthaltenden Zuschlagsstoffs mit Schlacke und/oder Asche zur Erzeugung von Flugasche
(4) Abführen eines Stromes des synthetischen Gases, des Reduktionsgases oder des Brenngases und mitgeführter Flugasche aus der zweiten Reaktionszone, wobei der Gasstrom, der aus der zweiten Reaktionszone abgeführt wird, gegenüber dem Gasstrom, der ohne Zufuhr des Kalzium enthaltenden Zuschlagsstoffs in (2) erzeugt wird, eine reduzierte Menge an Schwefel enthaltenden Gasen und eine erhöhte Menge an H₂ + Kohlenstoffoxiden und Kalziumoxidsulfidpartikeln beinhaltet.

6. Verfahren nach einem der Ansprüche 2, 4 und 5, wobei der Eisen oder Kalizium enthaltende Zuschlagstoff in den heißen Gasstrom von (1) an dem Einlaß der zweiten Reaktionszone und/oder an einem oder mehreren Orten in der zweiten Reaktionszone einführt wird.

7. Verfahren nach einem der Ansprüche 2 bis 6, mit einem Schritt des in Berührung Bringen des durch die zentrale Passage des Strahlungskühlers strömenden heißen Gases oder durch die zweite Reaktionszone strömenden Gases mit einem atomisierten Nebel aus einem eisenhaltigen oder kalziumhaltigen Zuschlagstoff.

8. Verfahren nach einem der Ansprüche 2 bis 6, wobei die Verweilzeiten in dem Partialoxidationsgasgenerator oder der ersten Reaktionszone und dem Strahlungskühler oder den zweiten Reaktionszonen in (1) und (2) jeweils in den Bereichen von ungefähr 0,5 - 10 Sekunden und ungefähr 5 - 50 Sekunden liegen.

9. Verfahren nach einem der Ansprüche 2 bis 8, wobei wenigstens ein Teil des mitgeführten Materials und der Schlacke in dem heißen Gasstrom, die in Schritt (1) den Gasgenerator verlassen, jeweils durch Gas/Feststoff-Trennmittel entfernt werden und vor der Einführung des heißen Gasstromes in den Strahlungskühler oder in die zweite Reaktionszone in Schritt (2) ausfallen.

10. Verfahren nach Anspruch 3, mit dem Schritt des Trennens des Eisenoxysulfids und der der Kohlenstoffpartikel aus dem gekühlten fließenden Gasstrom, der den Strahlungskühler verläßt und Rückführen von 0 bis 100 Gew.-% des Materials zu der Reaktionszone des Partialoxidationsgasgenerators.

11. Verfahren nach Anspruch 4 oder Anspruch 5, mit dem Schritt des Kühlens der heißen Gasstromes von (4) durch indirekten Wärmeaustausch, wodurch als Nebenprodukt Dampf erzeugt wird.

12. Verfahren nach Anspruch 4, mit dem Schritt des Abtrennens von Eisenoxydsulfid und der Kohlenstoffpartikel aus dem gekühlten fließenden Gasstrom und Rückführen von ungefähr 0 bis 100 Gew.-% des Materials zu der Reaktionszone des Partialoxidationsgasgenerators.

13. Verfahren nach einem der Ansprüche 2 bis 12, mit den Schritten des Abtrennens von Partikeln, die Eisenoxysulfide oder Kalziumsulfide und körnigen Kohlenstoff enthalten, aus dem teilweise abgekühlten Gasstrom aus (4) in einer Gas/Feststoff-Separationszone, Rösten der Partikel unter Erzeugen von im wesentlichen Eisenoxid oder Kalziumoxid und Schwefel enthaltendem Gas und Abtrennen des Eisenoxids und des Kalziumoxids von dem Schwefel enthaltenden Gas.

14. Verfahren nach Anspruch 13, mit dem Schritt des Einführens eines Teiles des Eisenoxids oder Kalziumoxids in Mischung mit einem Ausgleich an eisenhaltigem oder kalziumhaltigem Zuschlag, der in einem Träger in den Strahlungskühler oder die zweite Reaktionszone (2) mitgeführt wird, wobei die Materialien mit dem heißen Gasstrom aus (1) vermischt sind.

15. Verfahren nach Anspruch 13 oder Anspruch 14, mit dem Schritt des Einführens eines Teiles des Eisenoxids oder Kalziumoxids in die Partialoxidationsreaktionszone in (1) in Vermischung mit schwerem, flüssigen, kohlenwasserstoffhaltigen und/oder festem kohlenstoffhaltigen Brennstoff.

16. Verfahren nach einem der Ansprüche 13 bis 15, unter Klassifizieren der Partikel vor dem Rösten und Abtrennen von Materialien mit einer Korngröße von mehr als ungefähr 100 Mikron und Vermischen der Materialien mit einer Korngröße von mehr als 100 Mikron mit der Schwefel enthaltenden, schweren, flüssigen, kohlenwasserstoffhaltigen Brennstoffzufuhr und/oder Schwefel enthaltenden, festen, kohlenstoffhaltigen Brennstoffzufuhr in (1) und Einführen wenigstens eines Teiles der Mischung in die Reaktionszone des Partialoxidationsgasgenerators.

17. Verfahren nach Anspruch 5, wobei in Schritt (2) der zweite Teil des Schwefel enthaltenden Brennstoffs einen pumpbaren Sumpf aus festem kohlenstoffhaltigen Brennstoff und kalziumhaltigem Material mit einem festen Anteil von ungefähr 50 - 70 Gew.-% in einem flüssigen Träger ausgewählt aus der Gruppe, die aus H₂O und CO₂ besteht, aufweist, und mit dem Schritt des Abschöpfens des flüssigen Trägers, bevor die Mischung die zweite Reaktionszone erreicht, um den Betrag an H₂O, der die zweite Reaktionszone erreicht, auf 5 - 10 Gew.-% (ausgehend von dem Gewicht der Zufuhr) zu reduzieren oder alternativ den Betrag an CO₂, der die zweite Reaktionszone erreicht, auf ungefähr 10 bis 30 Gew.-% (ausgehend von dem Gewicht der Zufuhr) zu reduzieren.

18. Verfahren nach Anspruch 5, mit den Schritten des Abkühlens und des Reinigens der heißen Rohproduktgasmischung in (2) durch in Kontakt Bringen der heißen Rohproduktgasmischung mit einem einen flüssigen kohlenwasserstoffhaltigen Brennstoff kühlenden und reibenden Wirkstoff, wodurch ein Schlamm erzeugt wird, der Flugasche und Kalziumsulfid in flüssigem kohlenwasserstoffhaltigem Brennstoff aufweist.

19. Verfahren nach Anspruch 18, mit den Schritten des Dampfzerlegens der Flugasche und des Kalziumsulfids in flüssigen kohlenwasserstoffhaltigen Brennstoff enthaltenden Sschlamm und Abtrennen von H₂S und Rückführen des von Schwefel freiem, Kalzium enthaltenden Schlamms in die zweite Reaktionszone.

20. Verfahren nach Anspruch 3 oder Anspruch 4, wobei ein metallisches Oxid aus der Gruppe, die aus Kupferoxid, Zinkoxid, Kalziumoxid und Mischungen aus diesen besteht, in einen Strahlungskühler oder eine zweite Reaktionszone in Schritt (2) in einer Mischung mit dem Eisen enthaltenden Zuschlagstoff und einem zweiten Teil des Brennstoffs zugeführt wird.

21. Verfahren nach Anspruch 4 oder Anspruch 5, wobei ein Alkalimetall und/oder eine alkalische Erdmetallverbindung in die zweite Reaktionszone in (2) zugeführt wird in Mischung mit dem eisenhaltigen oder kalziumhaltigen Zuschlagstoff und dem zweiten Teil des Brennstoffs.

22. Verfahren nach Anspruch 21, wobei das Alkalimetall und/oder die alkalischen Erdmetallvernbindungen aus den Metallen in den Gruppen IA und/oder IIA der periodischen Elemententabelle ausgewählt sind.

23. Verfahren nach Anspruch 21, wobei in Schritt (1) ein erster Teil des Schwefel enthaltenden schweren, flüssigen kohlenwasserstoffhaltigen Brennstoffs und/oder Schwefel enthaltenden festen kohlenstoffhaltigen Brennstoffs, deren Aschen wenigstens 5,0 Gew.-% Vanadium, wenigstens an 2,0 Gew.-% Nickel und Silizium mit einem Zuschlagstoff A, der einen eisenhaltigen Zuschlagstoff aufweist, wenn der Silizumgehalt des Brennstoffvorrats geringer als 350 ppm ist oder einen Zuschlagstoff B, der ein eisen- und kalziumaufweisenden Zuschlagstoff aufweist, wenn der Silizumgehalt des Brennstoffvorrats ungefähr 400 ppm oder mehr beträgt, enthalten; und die Mischung wie oben angegeben zur Reaktion gebracht wird und bei Vorhandensein eines Temperaturmoderators in der ersten Reaktionszone bei einer Temperatur oberhalb der Erweichungstemperatur der Asche in der ersten Reaktionszone, Zugeben von ausreichend Zuschlagstoffen A oder B in die erste Reaktionszone, um so Eisenatome zu schaffen, wenn der Zuschlagstoff A verwendet wird oder aber Eisen und Kalziumatome zu schaffen, wenn der Zuschlagstoff B verwendet wird, in der Menge des ungefähr 1,0 bis 1,8-fachen der Schwefelatome in der ersten Reaktionszone zuzüglich des ungefähr 0,3 bis 1,2-fachen der Atome des Siliziums in der Asche in der ersten Reaktionszone; und wobei die Schritte (2) - (4) aufweisen:
(2) Führen wenigstens eines Teiles des heißen Gasstromes aus (1) in einer Mischung mit einem zweiten Teil des Schwefel enthaltenden schweren flüssigen kohlenwasserstoffhaltigen Brennstoffs und/oder Schwefel enthaltenden, festen kohlenstoffhaltigen Brennstoffs und eines Zuschlags A, der einen Eisen enthaltenden Zuschlag beinhaltet, wenn der Siliziumgehalt des Brennstoffvorrats geringer ist als 350 ppm oder eines Zuschlags B, der einen Eisen und Kalzium enthaltenden Zuschlag beinhaltet, wenn der Silizumgehalt des Brennstoffvorrats ungefähr 400 ppm oder mehr beträgt, durch eine ungestörte, feuerfest ausgekleidete Freistrom-Reaktionszone, wobei ein ausreichender Zuschlag A oder B in die zweite Reaktionszone eingeführt wird, um Eisenatome zu schaffen, wenn der Zuschlag A verwendet wird oder Eisen- und Kalziumatome, wenn ein Zuschlag B verwendet wird, in einer Menge, die ungefähr das 1,0 bis 1,8-fache der Schwefelatome in dem zweiten Teil des Schwefel enthaltenden Brennstoffs zuzüglich der Schwefelatome in den Schwefel enthaltenden Gasen in der zweiten Reaktionszone, zuzüglich ungefähr das 0,3 bis 1,2-fache der Silizumatome in der Asche aus dem zweiten Teil des Schwefel enthaltenden Brennstoffs beträgt und das Molverhältnis von H₂O und/oder CO₂ zu Kohlenstoff in der zweiten Reaktionszone in dem Bereich von ungefähr 0,7 bis 22,5 liegt, und das Gewichtsverhältnis des Zuschlags A oder B zur Asche in der ersten und der zweiten Reaktionszone in dem Bereich von ungefähr 1,0 bis 10,0 zu 1,0 liegt, und für jeden Gewichtsteil von Vanadium wenigstens 10 Gewichtsteile Eisen vorhanden sind, wenn der Zuschlag A verwendet wird, oder wenigstens 10 Gewichtsteile Eisen zuzüglich Kalzium vorhanden sind, wenn der Zuschlag B verwendet wird;
(3) Verdunsten des zweiten Teiles des Schwefel enthaltenden Brennstoffs in der zweiten Reaktionszone; und Reagierenlassen in der zweiten Reaktionszone in Abwesenheit eines zusätzlichen freien Sauerstoff aufweisen Gases und bei einer Temperatur im Bereich von 1000°F bis 2850°F von (i) H₂O und/oder CO₂ mit Kohlenstoff aus dem zweiten Teil des Brennstoffs, Kohlenstoffpartikel und nicht reagiertem Brennstoff, soweit vorhanden, zur Erzeugung von zusätzlichem H₂ und Kohlenstoffoxiden, mitgeführter geschmolzener Schlacke und von (ii) des Zuschlags A oder B mit den Schwefel enthaltenden Gasen in den in den Schritten (1) und (2) erzeugten Gasströmen zur Erzeugung von Partikeln, die Eisenoxysulfid und Kalziumsulfid mit dem Zuschlag B beinhalten, und wobei in der zweiten Reaktionszone bei Verwendung des Zuschlags A der eisenhaltige Zuschlag sich mit wenigstens einem Teil der Nickelbestandteile und des Schwefels aus dem Zufuhrvorrat verbindet, um einen flüssigen Phasenwaschwirkstoff zu erzeugen, der wenigstens einen Teil der vanadiumhaltigen Oxidlatten und -spinelle und andere Aschenkomponenten und feuerfesten Bestandteile sammelt und aus der zweiten Reaktionszone transportiert; und bei Verwendung eines Zuschlags B gesonderte Portionen des Eisen und Kalzium enthaltenden Zuschlags (I) sich mit einem Teil des Nickels, Kalziums und Schwefels verbinden, um einen flüssigen Phasenwaschwirkstoff zu bilden, der einen Teil der Vanadium enthaltenden Oxidlatten und -spinelle und andere Aschenkomponenten und feuerfesten Materialien zu bilden; und (II) mit einem Teil des Nickels, Kalzium und Siliziums verbinden, um eine flüssige Oxid/Silizium-Phase zu bilden, die im wesentlichen den verbleibenden Teil der Vanadium enthaltenden Oxidlatten und -spinelle und andere Aschenkomponenten zur Erzeugung einer geschmolzenen Schlacke zum Schmelzen bringt, und
(4) Abführen eines Stromes des synthetischen Gases, Reduktionsgases oder Brenngases und der Schlacke aus der zweiten Reaktionszone, wobei der bei (4) abgeführte Gasstrom gegenüber dem Produktgasstrom, der ohne Zufuhr der Zuschläge A und B in (1) und (2) erzeugt wird, eine reduzierte Menge an Schwefel enthaltenden Gasen und erhöhte Mengen von H₂ und Kohlenstoffoxiden und Eisenoxysulfiden und Kalziumsulfidpartikel aufweist.

24. Verfahren nach Anspruch 23, wobei in dem Schritt (1) ein ausreichender Zuschlag A oder B in die erste Reaktionszone eingeführt wird, um bei Verwendung des Zuschlags A Eisenatome und bei Verwendung des Zuschlags B Eisen- und Kalziumatome in einer Menge des 1,0 bis 1,8-fachen der Schwefelatome in der ersten Reaktionszone zuzüglich des ungefähr 0,3 bis 1,2-fachen der Siliziumatome in der Asche der zweiten Reaktionszone und für jedes Gewichtsteil des Vanadiums weniger als 10 Gewichtsteile des Eisens vorliegen, wenn der Zuschlag A verwendet wird, oder aber wenigstens 10 Gewichtsteile von Eisen und Kalzium, wenn der Zuschlag B verwendet wird zu schaffen, und wobei die Schritte (2) - (4) aufweisen:
(2) Führen wenigstens eines Teiles des heißen Gasstroms (1) in Mischung mit einem zweiten Teil des Schwefel enthaltenden schweren flüssigen kohlenwasserstoffhaltigen Brennstoffs und/oder Schwefel enthaltenden festen, kohlenstoffhaltigen Brennstoffs und eines Kalzium enthaltenden Zuschlags durch eine zweite ungestörte, feuerfest ausgekleidete Freistrom-Reaktionszone, wobei ausreichend Kalzium enthaltender Zuschlag in die zweite Reaktionszone zugeführt wird, so daß Kalziumatome in einer Menge des 0,95 bis 1,8-fachen der Schwefelatome in der zweiten Reaktionszone zuzüglich des ungefähr 0,1 bis 0,2-fachen der Siliziumatome in der Asche von dem zweiten Teil des Schwefel enthaltenden Brennstoffs in der zweiten Reaktionszone zugeführt wird und das Molverhältnis von H₂ und/oder CO₂ zu Kohlenstoff in der zweiten Reaktionszone in dem Bereich von 0,7 bis 25,0 liegt; und das Gewichtsverhältnis des Kalzium beinhaltenden Zuschlags zur Asche in der zweiten Reaktionszone von ungefähr 1,0 - 10,0 bis 1,0 beträgt;
(3) Verdunsten des zweiten Teiles des Schwefel enthaltenden Brennstoffs und Reagierenlassen in einer zweiten Reaktionszone die bei Fehlen eines zusätzlichen freien Sauerstoff enthaltenden Gases und bei einer Temperatur unterhalb derjenigen in der ersten Reaktionszone und unterhalb der Erweichungstemperatur der Asche, von (i) H₂ und/oder CO₂ mit Kohlenstoff aus dem zweiten Teil des Brennstoffs, um zusätzlich H₂ oder Kohlenstoffoxide zu erzeugen und von (ii) dem Kalzium enthaltenden Zuschlag mit den Schwefel enthaltenden Gasen in den Gasströmen, die in den Schritten (1) und (2) erzeugt worden sind, um Partikel zu erzeugen, die Kalziumsulfid beinhalten und Verbinden eines Teiles der neu gebildeten Partikel und/oder kalziumhaltigen Zuschlags mit der Schlacke und/oder Asche zur Erzeugung von Flugasche mit einer verringerten Erweichungstemperatur der Schlacke in der zweiten Reaktionszone; und
(4) Abführen eines Stromes des synthetischen Gases, des Reduktionsgases oder des Brenngases mit mitgeführter Flugasche aus der zweiten Reaktionszone, wobei der aus der zweiten Reaktionszone entnommene Gasstrom gegenüber einem Gasstrom, der ohne die Einführung des Kalzium enthaltenden Zuschlags in (2) eine verringerte Menge an Schwefel enthaltenden Gasen und erhöhte Mengen an H₂ und Kohlenstoffoxiden und Kalziumsulfid enthaltende Partikel aufweist.

25. Verfahren nach Anspruch 23 oder Anspruch 24, wobei der Eisen und Kalzium enthaltende Zuschlag B ungefähr 30,0 bis 90,0 Gew.-% einer Eisenverbindung enthält und der Rest im wesentlichen eine Kalziumverbindung beinhaltet.

26. Verfahren nach einem der Ansprüche 23 bis 25, wobei in den Zuschlägen A oder B in Schritt (1) eine weitere Materialkomponente vorhanden ist, die aus der Gruppe der Elemente, die aus Magnesium, Chrom oder Mischung aus diesen besteht, gewählt ist.

27. Verfahren nach Anspruch 22, wobei der flüssige Phasenwaschwirkstoff im wesentlichen Eisensulfid mit etwa 75 bis 95 Gew.-%, Nickelsulfid mit ungefähr 0,5 bis 3,0 Gew.-% und Eisenoxid mit ungefähr 2 bis 9 Gew.-% aufweist.

28. Verfahren nach einem der Ansprüche 13 bis 27, mit dem Schritt des Abtrennens wenigstens eines Teiles der in dem heißen, aus der ersten Reaktionszone ausströmenden Gasstrom mitgeführten Schlacke vor der zweiten Reaktionszone.

## Revendications

1. Dans un procédé en continu pour la production de gaz de synthèse, de gaz de chauffage ou de gaz réducteur désulfurés comprenant :
(1) la réaction d'un combustible hydrocarboné liquide lourd à teneur soufrée et/ou un combustible carboné solide à teneur soufrée, par oxydation partielle avec un gaz contenant de l'oxygène libre dans une première zone de réaction d'un gazogène, à flux libre et présentant une garniture intérieure réfractaire, à une température autogène de l'ordre d'environ 1038°C à 1593°C (1900°F à 2900°F), et une pression de l'ordre d'environ 0,2 à 25 MPa (2 à 250 atmosphères) pour la production d'un flux chaud de gaz de synthèse, gaz réducteur ou gaz de chauffage comprenant de l'H₂, du CO, CO₂, H₂S, COS et au moins une substance gazeuse sélectionnée dans le groupe composé par H₂O, N₂, CH₄, NH₃, A, et contenant des matières entraînées comprenant du carbone pulvérulent et des scories;
l'utilisation d'un additif contenant du fer et/ou contenant du calcium, en tant que réactif en mélange avec au moins une partie du flux gazeux chaud venant de (1) avec ou sans une seconde partie dudit combustible à teneur soufrée dans le passage central non obstrué d'une seconde zone de réaction, pour entrer en réaction dans ladite seconde zone de réaction à une température inférieure à celle de ladite première zone de réaction, en plus de la réaction de H₂O et/ou CO₂ avec le carbone pour produire de l'H₂ et de l'oxyde de carbone supplémentaires, avec les gaz à teneur soufrée dans ledit flux gazeux pour produire de la matière pulvérulente comprenant de l'oxysulfure de fer et/ou du sulfure de calcium, une partie de ladite matière pulvérulente nouvellement formée et/ou dudit additif contenant du fer et/ou contenant du calcium étant combinés avec des scories fondues et/ou des cendres, pour produire des scories ayant une température de fusion des cendres et une viscosité réduites ou des cendres volantes ayant une température accrue de ramollissement des cendres; et un flux partiellement refroidi de gaz de synthèse, de gaz réducteur ou de gaz de chauffage contenant une quantité réduite de gaz à teneur soufrée, qui est retiré de ladite seconde zone de réaction.

2. Un procédé en continu pour la production de gaz de synthèse, de gaz de chauffage ou de gaz réducteur désulfurés comprenant :
(1) la réaction d'un combustible hydrocarboné liquide lourd à teneur soufrée et/ou un combustible carboné solide à teneur soufrée, par oxydation partielle avec un gaz contenant de l'oxygène libre dans une première zone de réaction d'un gazogène, à flux libre et présentant une garniture intérieure réfractaire, à une température autogène de l'ordre d'environ 1038°C à 1593°C (1900°F à 2900°F), et une pression de l'ordre d'environ 0,2 à 25 MPa (2 à 250 atmosphères) pour la production d'un flux chaud de gaz de synthèse, gaz réducteur ou gaz de chauffage comprenant de l'H₂, du CO, CO₂, H₂S, COS et au moins une substance gazeuse sélectionnée dans le groupe composé par H₂O, N₂, CH₄, NH₃, A, et contenant des matières entraînées comprenant du carbone pulvérulent et des scories;
(2) le passage d'au moins une partie du flux gazeux chaud venant de (1) en mélange avec un additif contenant du fer et/ou contenant du calcium avec ou sans une seconde partie dudit combustible à teneur soufrée au travers d'un passage central non obstrué d'une seconde zone de réaction;
(3) la réaction, dans ladite seconde zone de réaction à une température inférieure à celle de ladite première zone de réaction, (i) de l'H₂O et/ou du CO₂ avec du carbone pour produire de l'H₂ + des oxydes de carbone supplémentaires; et (ii) dudit additif contenant du fer et/ou contenant du calcium avec les gaz à teneur soufrée dans ledit flux gazeux pour produire de la matière pulvérulente comprenant de l'oxysulfure de fer et/ou du sulfure de calcium; et la combinaison dans ladite seconde zone de réaction d'une partie de ladite matière pulvérulente nouvellement formée et/ou dudit additif contenant du fer et/ou contenant du calcium, avec des scories fondues et/ou des cendres, pour produire des scories ayant une température de fusion des cendres et une viscosité réduites ou des cendres volantes ayant une température accrue de ramollissement des cendres; et
(4) le retrait de ladite seconde zone de réaction d'un flux partiellement refroidi de gaz de synthèse, de gaz réducteur ou de gaz de chauffage contenant une quantité réduite de gaz à teneur soufrée.

3. Un procédé selon la revendication 2, dans lequel, à l'étape (1), un modérateur de température est présent dans ladite première zone de réaction et la température à l'intérieur est supérieure à la température de fusion des cendres des scories formées dans la zone de réaction, et dans lequel les étapes (2) à (4) comprennent :
(2) le passage d'au moins une partie du flux gazeux chaud venant de (1) en mélange avec un additif contenant du fer à travers un passage central non obstrué d'un refroidisseur par rayonnement; où, dans ledit refroidisseur par rayonnement le rapport de poids de l'additif contenant du fer sur le soufre plus les cendres dans la matière première combustible est de l'ordre d'environ 0,5 à 10,0 sur 1,0 et dans lequel ledit additif contenant du fer est introduit dans le flux gazeux chaud venant de (1) à l'entrée du refroidisseur par rayonnement et/ou à un ou plusieurs emplacements de ce dernier;
(3) la réaction dans ledit refroidisseur par rayonnement dudit additif contenant du fer avec les gaz à teneur soufrée dans ledit flux gazeux, pour produire de la matière pulvérulente comprenant de l'oxysulfure de fer, et la combinaison dans ladite zone du refroidisseur par rayonnement d'une partie de ladite matière pulvérulente nouvellement formée et/ou de l'additif contenant du fer avec des scories fondues et/ou des cendres, pour produire des scories ayant une température de fusion des cendres et une viscosité réduites; tout en réduisant en même temps la température dudit flux gazeux d'une température d'entrée de l'ordre d'environ 1038°C à 1593°C (1900°F à 2800°F) à une température de retrait de l'ordre d'environ 538°C à 871°C (1000°F à 1600°F) par un échange indirect de chaleur avec un fluide de refroidissement; et
(4) le retrait dudit refroidisseur par rayonnement d'un flux partiellement refroidi de gaz de synthèse, de gaz réducteur ou de gaz de chauffage et de scories; et en comparaison avec un flux gazeux produit sans l'introduction dudit additif contenant du fer en (2), ledit flux gazeux partiellement refroidi contient une quantité réduite de gaz à teneur soufrée et des quantités accrues de H₂ + d'oxydes de carbone et de matière pulvérulente contenant de l'oxysulfure de fer.

4. Un procédé selon la revendication 2 dans lequel, à l'étape (1), une première partie du combustible hydrocarboné liquide lourd à teneur soufrée et/ou du combustible carboné solide à teneur soufrée est mise en réaction comme dit précédemment dans ladite première zone de réaction, et dans lequel les étapes (2) à (4) comprennent :
(2) le passage d'au moins une partie du flux gazeux chaud venant de (1) en mélange avec une seconde partie dudit combustible et un additif contenant du fer à travers une, seconde zone de réaction à flux libre, non obstruée et présentant une garniture intérieure réfractaire, dans lequel on introduit une quantité suffisante d'additif contenant du fer dans la seconde zone de réaction, afin de fournir des atomes de fer dans une quantité d'environ 1,1 à 1,8 fois les atomes de soufre dans la seconde zone de réaction, plus environ 0,3 à 1,2 fois les atomes de silicium dans les cendres de la seconde zone de réaction, et dans lequel le rapport molaire de H₂O et/ou CO₂ sur le carbone est, dans la seconde zone de réaction, de l'ordre d'environ 0,7 à 25;
(3) l'élimination des parties volatiles de ladite seconde partie de combustible à teneur soufrée et la réaction dans ladite seconde zone de réaction à une température inférieure à celle de ladite première zone de réaction et en l'absence de gaz additionnel contenant de l'oxygène libre, (i) de l'H₂O et/ou du CO₂ avec du carbone venant de ladite seconde partie de combustible avec du carbone pulvérulent et toute partie, qui ne serait pas entrée en réaction, de ladite première partie de combustible, pour produire de l'H₂ et des oxydes de carbone supplémentaires; et (ii) dudit additif contenant du fer avec les gaz à teneur soufrée dans les flux gazeux produits aux étapes (1) et (2), pour produire la matière pulvérulente comprenant de l'oxysulfure de fer; et la combinaison dans ladite seconde zone de réaction d'une partie de ladite matière pulvérulente nouvellement formée et/ou dudit additif contenant du fer avec des scories et/ou des cendres, pour produire des scories ayant une température réduite de ramollissement des cendres et une viscosité réduite; et
(4) le retrait de ladite seconde zone de réaction d'un flux de gaz de synthèse, de gaz réducteur ou de gaz de chauffage et de scories; et en comparaison avec un flux gazeux produit sans l'introduction dudit additif contenant du fer en (2), ledit flux gazeux retiré de la seconde zone de réaction contient une quantité réduite de gaz à teneur soufrée et des quantités accrues de H₂ + d'oxydes de carbone et de matière pulvérulente contenant de l'oxysulfure de fer.

5. Un procédé selon la revendication 2, dans lequel, à l'étape (1), une première partie dudit combustible hydrocarboné liquide lourd à teneur soufrée et/ou du combustible carboné solide contenant environ 0,2 à 8,0 % en poids de soufre est mis en réaction comme dit précédemment dans ladite première zone de réaction avec des quantités contrôlées de gaz contenant de l'oxygène libre et un modérateur de température, de telle façon qu'une concentration d'oxygène à l'équilibre, avec une pression partielle qui est inférieure à environ 1,01 x 10⁻¹³ MPa (10⁻¹² atmosphères), est fournie dans la phase gazeuse dans ladite première zone de réaction et dans une seconde zone de réaction en aval; et dans ladite première zone de réaction le rapport atomique O/C est de l'ordre d'environ 0,3 à 1,1, le rapport du poids de l'eau sur le combustible carboné solide plus la matière hydrocarbonée liquide, s'il en existe, est de l'ordre d'environ 0,3 à 0,70, et environ 70 à 98 % en poids du carbone dans ledit combustible à teneur soufrée est transformé en oxydes de carbone, produisant ainsi un flux gazeux chaud qui comprend un mélange gazeux de matières premières comprenant de l'H₂, du CO, CO₂, H₂S, COS, au moins un gaz sélectionné dans le groupe composé par H₂O, N₂, CH₄, et A, et des matières entraînées comprenant du carbone pulvérulent, le cas échéant du combustible n'étant pas entré en réaction, et des scories fondues; et la température est supérieure à la température de ramollissement des cendres dans le combustible, et au moins 90 % en poids du soufre contenu dans le combustible dans la première zone de réaction est transformé en gaz à teneur soufrée; et dans lequel les étapes (2) à (4) comprennent :
(2) le passage d'au moins une partie du flux gazeux chaud venant de (1) en mélange avec une seconde partie dudit combustible à teneur soufrée et d'un additif contenant du calcium à travers une seconde zone de réaction à flux libre, non obstruée et présentant une garniture intérieure réfractaire, dans lequel on introduit une quantité suffisante d'additif contenant du calcium dans la seconde zone de réaction, afin de fournir des atomes de calcium dans une quantité d'environ 0,95 à 1,8 fois les atomes de soufre dans la seconde zone de réaction, plus environ 0,1 à 0,2 fois les atomes de silicium dans les cendres de la seconde zone de réaction, et dans lequel le rapport molaire de H₂O et/ou CO₂ sur le carbone est, dans la seconde zone de réaction, de l'ordre d'environ 0,7 à 25;
(3) l'élimination des parties volatiles de ladite seconde partie de combustible à teneur soufrée et la réaction dans ladite seconde zone de réaction en l'absence de gaz additionnel contenant de l'oxygène libre, à une température inférieure à celle de ladite première zone de réaction et inférieure à la température de ramollissement des cendres, (i) de l'H₂O et/ou du CO₂ avec du carbone venant de ladite seconde partie de combustible et du carbone venant de ladite première partie de combustible, qui, le cas échéant, ne serait pas entrée en réaction, pour produire de l'H₂ et des oxydes de carbone supplémentaires; et (ii) dudit additif contenant du calcium avec les gaz à teneur soufrée dans les flux gazeux produits aux étapes (1) et (2), pour produire de la matière pulvérulente comprenant du sulfure de calcium et la combinaison dans ladite seconde zone de réaction d'une partie de ladite matière pulvérulente nouvellement formée et/ou dudit additif contenant du calcium avec des scories et/ou des cendres, pour produire des cendres volantes ayant une température de ramollissement des cendres accrue; et
(4) le retrait de ladite seconde zone de réaction d'un flux de gaz de synthèse, de gaz réducteur ou de gaz de chauffage avec des cendres volantes entraînées et en comparaison avec un flux gazeux produit sans l'introduction dudit additif contenant du calcium en (2), ledit flux gazeux retiré de la seconde zone de réaction contient une quantité réduite de gaz à teneur soufrée et des quantités accrues de H₂ + d'oxydes de carbone et de matière pulvérulente contenant du sulfure de calcium.

6. Un procédé selon l'une quelconque des revendications 2, 4 et 5, dans lequel ledit additif contenant du fer ou contenant du calcium est introduit dans le flux gazeux chaud venant de (1) à l'entrée de la seconde zone de réaction et/ou à un ou plusieurs emplacements de cette dernière.

7. Un procédé selon l'une quelconque des revendications 2 à 6, qui, comporte l'étape de mise en contact du flux gazeux chaud passant à travers le passage central dudit refroidisseur par rayonnement ou de ladite seconde zone de réaction avec une vaporisation atomisée dudit additif contenant du fer ou contenant du calcium.

8. Un procédé selon l'une quelconque des revendications 2 à 6, dans lequel les temps de séjour dans le gazogène à oxydation partielle ou dans la première zone de réaction et le refroidisseur par rayonnement ou dans les secondes zones de réaction en (1) et (2) sont respectivement de l'ordre d'environ 0,5 à 10 secondes et d'environ 5 à 50 secondes.

9. Un procédé selon l'une quelconque des revendications 2 à 8, dans lequel au moins une partie des matières entraînées et des scories du flux gazeux chaud quittant le gazogène en (1) sont retirées respectivement par des moyens de séparation gaz-solides et par décantation avant l'introduction du flux gazeux chaud dans le refroidisseur par rayonnement ou la seconde zone de réaction en (2).

10. Un procédé selon la revendication 3, qui comporte l'étape de séparation de l'oxysulfure de fer et du carbone pulvérulent venant du flux gazeux effluent refroidi quittant le refroidisseur par rayonnement, et le recyclage de 0 à 100 % en poids desdites matières vers la zone de réaction du gazogène à oxydation partielle.

11. Un procédé selon la revendication 4 ou la revendication 5, qui comporte l'étape de refroidissement du flux gazeux chaud venant de (4) par échange indirect de chaleur produisant, de ce fait, de la vapeur en tant que sous-produit.

12. Un procédé selon la revendication 4, qui comporte l'étape de séparation de l'oxysulfure de fer et du carbone pulvérulent venant du flux gazeux effluent refroidi et le recyclage d'environ 0 à 100 % en poids desdites matières vers la zone de réaction du gazogène à oxydation partielle.

13. Un procédé selon l'une quelconque des revendications 2 à 12, qui comporte les étapes de séparation des matières pulvérulentes comprenant de l'oxysulfure de fer ou du sulfure de calcium et du carbone pulvérulent venant du flux gazeux partiellement refroidi venant de (4) dans une zone de séparation gaz-solides, la calcination desdites matières pulvérulentes, de ce fait produisant de façon substantielle de l'oxyde de fer ou de l'oxyde de calcium et du gaz à teneur soufrée, et la séparation dudit oxyde de fer ou oxyde de calcium dudit gaz à teneur soufrée.

14. Un procédé selon la revendication 13, qui comporte l'étape d'introduction d'une partie dudit oxyde de fer ou oxyde de calcium en mélange avec un additif d'appoint contenant du fer ou contenant du calcium entraîné dans un support dans le refroidisseur par rayonnement ou la seconde zone de réaction en (2), où lesdites matières sont mélangées avec ledit flux gazeux chaud venant de (1).

15. Un procédé selon la revendicaiton 13 ou la revendication 14, qui comporte l'étape d'introduction d'une partie dudit oxyde de fer ou oxyde de calcium dans ladite zone de réaction par oxydation partielle en (1) en mélange avec ledit combustible hydrocarboné liquide lourd et/ou carboné solide.

16. Un procédé selon l'une quelconque des revendications 13 à 15, qui comporte le tri desdites matières pulvérulentes avant ladite étape de calcination et la séparation des matières ayant une grosseur de particules supérieure à 100 microns et le mélange desdites matières ayant une grosseur de particules supérieure à environ 100 microns avec la matière première combustible hydrocarbonée liquide lourde à teneur soufrée et/ou la matière première combustible carbonée solide à teneur soufrée à l'étape (1), et l'introduction d'au moins une partie dudit mélange dans la zone de réaction du gazogène à oxydation partielle.

17. Un procédé selon la revendication 5, dans lequel en (2), ladite seconde partie de combustible à teneur soufrée comprend une bouillie pompable de combustible carboné solide et de matière contenant du calcium ayant un contenu en solides d'environ 50 à 70 % en poids dans un support liquide sélectionné dans le groupe formé de H₂O et CO₂; et qui comporte l'étape d'élimination par distillation dudit support liquide avant que ledit mélange n'entre dans la seconde zone de réaction pour réduire la quantité d'H₂O pénétrant dans la seconde zone de réaction à environ 5 à 10 % en poids (poids de base de la matière première), ou alternativement pour réduire la quantité de CO₂ pénétrant dans la seconde zone de réaction à environ 10 à 30 % en poids (poids de base de la matière première).

18. Un procédé selon la revendication 5, qui comporte les étapes de refroidissement et de nettoyage du mélange gazeux chaud de matière brute en (2) par la mise en contact dudit mélange gazeux chaud de matière brute avec un agent refroidissant et décapant du combustible hydrocarboné liquide produisant, de ce fait, une bouillie comprenant des cendres volantes et du sulfure de calcium dans le combustible hydrocarboné liquide.

19. Un procédé selon la revendication 18, qui comporte les étapes d'extraction à la vapeur de ladite bouillie comprenant des cendres volantes et du sulfure de calcium dans le combustible hydrocarboné liquide et la séparation de l'H₂S, et le recyclage de la bouillie contenant du calcium et débarrassée du soufre vers la seconde zone de réaction.

20. Un procédé selon la revendication 3 ou la revendication 4, dans lequel un oxyde métallique du groupe constitué par l'oxyde de cuivre, l'oxyde de zinc, l'oxyde de calcium et leurs mélanges, est introduit dans le refroidisseur par rayonnement ou la seconde zone de réaction en (2) en mélange avec ledit additif contenant du fer et ladite seconde partie de combustible.

21. Un procédé selon la revendication 4 ou la revendication 5, dans lequel un composé de métal alcalin et/ou un composé de métal alcalino-terreux est introduit dans la seconde zone de réaction en (2) en mélange avec ledit additif contenant du fer ou contenant du calcium et ladite seconde partie de combustible.

22. Un procédé selon la revendication 21, dans lequel lesdits composés de métal alcalin et/ou de métal alcalino-terreux sont choisis parmi les métaux de la Table périodique des éléments dans les groupes IA et/ou IIA.

23. Un procédé selon la revendication 21, dans lequel, à l'étape (1), une première partie du combustible hydrocarboné liquide lourd à teneur soufrée et/ou du combustible carboné solide à teneur soufrée dont les cendres contiennent un minimum de 5,0 % en poids de vanadium, un minimum de 2,0 % en poids de nickel et du silicium, est mélangée avec l'additif A comprenant un additif contenant du fer quand le contenu en silicium de ladite matière première combustible est inférieur à 350 ppm, ou avec l'additif B comprenant un additif contenant du fer et du calcium quand le contenu en silicium de ladite matière première combustible est d'environ 400 ppm ou plus; et ledit mélange est mis en réaction comme indiqué précédemment et en présence d'un modérateur de température dans ladite première zone de réaction à une température supérieure à la température de ramollissement des cendres dans la première zone de réaction; une quantité suffisante d'additif A ou B étant introduite dans la première zone de réaction afin de fournir des atomes de fer quand l'additif A est utilisé ou des atomes de fer et de calcium quand l'additif B est utilisé dans une quantité d'environ 1,0 à 1,8 fois les atomes de soufre dans la première zone de réaction, plus environ 0,3 à 1,2 fois les atomes de silicium dans les cendres de la première zone de réaction; et dans lequel les étapes (2) à (4) comprennent :
(2) le passage d'au moins une partie du flux gazeux chaud venant de (1) en mélange avec une seconde partie dudit combustible hydrocarboné liquide lourd à teneur soufrée et/ou du combustible carboné solide à teneur soufrée et l'additif A comprenant un additif contenant du fer quand le contenu en silicium de ladite matière première combustible est inférieur à 350 ppm, ou l'additif B comprenant un additif contenant du fer et du calcium quand le contenu en silicium de ladite matière première combustible est d'environ 400 ppm ou plus à travers une seconde zone de réaction à flux libre, non obstruée et présentant une garniture intérieure réfractaire; dans lequel une quantité suffisante d'additif A ou B est introduite dans la seconde zone de réaction afin de fournir des atomes de fer quand l'additif A est utilisé ou des atomes de fer et de calcium quand l'additif B est utilisé dans une quantité d'environ 1,0 à 1,8 fois les atomes de soufre dans la seconde partie de combustible à teneur soufrée, plus les atomes de soufre des gaz à teneur soufrée dans la seconde zone de réaction, plus environ 0,3 à 1,2 fois les atomes de silicium dans les cendres de ladite seconde partie de combustible à teneur soufrée, et le rapport molaire de H₂O et/ou CO₂ sur le carbone dans la seconde zone de réaction est de l'ordre d'environ 0,7 à 25,0; et le rapport de poids de l'additif A ou B sur les cendres dans la première et la seconde zones de réaction est de l'ordre d'environ 1,0 à 10,0 sur 1,0, et pour chaque partie en poids de vanadium, on a au moins 10 parties en poids de fer quand l'additif A est utilisé, ou au moins 10 parties en poids de fer plus calcium quand l'additif B est utilisé;
(3) l'élimination des parties volatiles de ladite seconde partie de combustible à teneur soufrée dans ladite seconde zone de réaction; et la réaction dans ladite seconde zone de réaction en l'absence de gaz additionnel contenant de l'oxygène libre et à une température de l'ordre d'environ 1000°F à 2850°F, (i) de l'H₂O et/ou du CO₂ avec du carbone venant de ladite seconde partie de combustible, avec du carbone pulvérulent et du combustible qui ne serait pas entré en réaction, le cas échéant, pour produire de l'H₂ et des oxydes de carbone supplémentaires, des scories fondues entraînées; et (ii) desdits additifs A ou B avec les gaz à teneur soufrée dans les flux gazeux produits aux étapes (1) et (2), pour produire de la matière pulvérulente comprenant de l'oxysulfure de fer et aussi du sulfure de calcium avec l'additif B; et dans lequel dans ladite seconde zone de réaction quand l'additif A est utilisé, ledit additif contenant du fer entre en combinaison avec au moins une partie desdits composés du nickel et le soufre de la matière première pour produire un agent lavant de phase liquide qui rassemble et évacue au moins une partie des lamelles et spinelles-oxydes contenant du vanadium et d'autres composants de cendres et produits réfractaires hors de la seconde zone de réaction; et quand l'additif B est utilisé, les parties séparées dudit additif contenant du fer et du calcium (I) entrent en combinaison avec une partie desdits nickel, calcium et soufre pour engendrer un agent de lavage de phase liquide qui rassemble et évacue une partie des lamelles et spinelles-oxydes contenant du vanadium et d'autres composants de cendres et produits réfractaires; et (II) entrent en combinaison avec une partie desdits nickel, calcium et silicium pour engendrer une phase liquide d'oxydes et de silicates qui fluidifie pratiquement la totalité de la partie restante desdites lamelles et spinelles-oxydes contenant du vanadium et autres composants de cendres pour produire des scories fondues; et
(4) le retrait de la seconde zone de réaction d'un flux de gaz de synthèse, de gaz réducteur ou de gaz de chauffage et de scories; et en comparaison avec le flux gazeux de matière produit sans l'introduction dudit additif A ou B en (1) et (2), le flux gazeux retiré de (4) contient une quantité réduite de gaz à teneur soufrée et des quantités accrues de H₂ + d'oxydes de carbone et de matière pulvérulente contenant de l'oxysulfure de fer et du sulfure de calcium.

24. Un procédé selon la revendication 23, dans lequel à l'étape (1), on introduit une quantité suffisante d'additif A ou B dans la première zone de réaction, afin de fournir des atomes de fer quand l'additif A est utilisé ou des atomes de fer et de calcium quand l'additif B est utilisé, dans une quantité d'environ 1,0 à 1,8 fois les atomes de soufre dans la première zone de réaction, plus environ 0,3 à 1,2 fois les atomes de silicium dans les cendres de la seconde zone de réaction; et pour chaque partie en poids de vanadium, on a au moins 10 parties en poids de fer quand l'additif A est utilisé, ou au moins 10 parties en poids de fer et de calcium quand l'additif B est utilisé; et dans lequel les étapes 2 à 4 comprennent :
(2) le passage d'au moins une partie du flux gazeux chaud venant de (1) en mélange avec une seconde partie dudit combustible hydrocarboné liquide lourd à teneur soufrée et/ou du combustible carboné solide à teneur soufrée et un additif contenant du calcium à travers une seconde zone de réaction à flux libre, non obstruée et présentant une garniture intérieure réfractaire; dans lequel on introduit une quantité suffisante de l'additif contenant du calcium dans la seconde zone de réaction afin de fournir des atomes de calcium dans une quantité d'environ 0,95 à 1,8 fois les atomes de soufre dans la seconde zone de réaction, plus environ 0,1 à 0,2 fois les atomes de silicium dans les cendres venant de la seconde partie de combustible à teneur soufrée, et le rapport molaire de H₂O et/ou CO₂ sur le carbone dans la seconde zone de réaction est de l'ordre d'environ 0,7 à 25,0; et le rapport de poids de l'additif contenant du calcium sur les cendres dans la seconde zone de réaction est de l'ordre d'environ 1,0 à 10,0 sur 1,0;
(3) l'élimination des parties volatiles de ladite seconde partie de combustible à teneur soufrée et la réaction dans ladite seconde zone de réaction en l'absence de gaz additionnel contenant de l'oxygène libre; et à une température inférieure à celle de ladite première zone de réaction et inférieure à la température de ramollissement des cendres, (i) de l'H₂O et/ou du CO₂ avec du carbone venant de ladite seconde partie de combustible, pour produire de l'H₂ et des oxydes de carbone supplémentaires; et (ii) dudit additif contenant du calcium avec les gaz à teneur soufrée dans les flux gazeux produits aux étapes (1) et (2), pour produire de la matière pulvérulente comprenant du sulfure de calcium et la combinaison dans ladite seconde zone de réaction d'une partie de ladite matière pulvérulente nouvellement formée et/ou de l'additif contenant du calcium avec des scories et/ou des cendres pour produire des cendres volantes ayant une température de ramollissement des cendres réduite; et
(4) le retrait de ladite seconde zone de réaction d'un flux de gaz de synthèse, de gaz réducteur ou de gaz de chauffage avec des cendres volantes entraînées; et en comparaison avec un flux gazeux produit sans l'introduction dudit additif contenant du calcium en (2), le flux gazeux retiré de la seconde zone de réaction contient une quantité réduite de gaz à teneur soufrée et des quantités accrues de H₂ + d'oxydes de carbone et de matière pulvérulente contenant du sulfure de calcium.

25. Un procédé selon la revendication 23 ou la revendication 24, dans lequel ledit additif B contenant du fer et du calcium comprend environ 30,0 à 90,0 % en poids d'un composé ferreux, et le reste contient une quantité substantielle de composé calcique.

26. Un procédé selon l'une quelconque des revendications 23 à 25, dans lequel on ajoute à l'additif A ou B en (1) une substance additionnelle choisie dans le groupe d'éléments composé du magnésium, du chrome et de leurs mélanges.

27. Un procédé selon la revendication 23, dans lequel ledit agent de lavage de phase liquide comprend de façon substantielle environ 75 à 95 % en poids de sulfure de fer, environ 0,5 à 3,0 % en poids de sulfure de nickel et environ 2 à 9 % en poids d'oxyde de fer.

28. Un procédé selon l'une quelconque des revendications 23 à 27, qui comporte l'étape de séparation d'au moins une partie des scories entraînées dans le flux gazeux effluent chaud venant de la première zone de réaction, avant la seconde zone de réaction.
